(19) Europäisches Patentamt
European Patent Office
Office européen des brevets

(11) **EP 4 704 483 A1**

(12) **EUROPEAN PATENT APPLICATION**
published in accordance with Art. 153(4) EPC

(43) Date of publication:
**04.03.2026 Bulletin 2026/10**

(21) Application number: **23947083.4**

(22) Date of filing: **01.08.2023**

(51) International Patent Classification (IPC):
**H04W 72/23** (2023.01)

(52) Cooperative Patent Classification (CPC):
**H04W 72/23**

(86) International application number:
**PCT/CN2023/110500**

(87) International publication number:
**WO 2025/025135 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **KONG, Lei**
  **Beijing 100102 (CN)**
• **ZHOU, Lei**
  **Beijing 100102 (CN)**

(74) Representative: **2SPL Patentanwälte PartG mbB**
**Landaubogen 3**
**81373 München (DE)**

(54) **SUB-BAND RESOURCE DETERMINING METHOD AND APPARATUS, AND DEVICE**

(57) The present application provides a sub-band resource determining method and apparatus, and a device. The method comprises: receiving a sub-band resource indication message sent by a base station, wherein the sub-band resource indication message comprises frequency domain resource information of a first-type sub-band; determining a start position and/or an end position of the first-type sub-band on the basis of a frequency domain resource of the first-type sub-band indicated by the frequency domain resource information, and determining a start position or an end position of a guard sub-band by means of the start position and/or the end position of the first-type subband; receiving a configuration message of the guard sub-band sent by the base station, wherein the configuration message of the guard subband comprises the length of the guard sub-band; and determining a guard sub-band resource from a BWP by means of the start position of the guard subband and the length of the guard sub-band, or determining a guard sub-band resource from the BWP on the basis of the end position of the guard subband and the length of the guard sub-band. The solution of the present application can improve the resource utilization rate.

Receive a subband resource indication message from a base station, the subband resource indication message including frequency domain resource information of a first-type subband — 111

Determine a starting position and/or an ending position of the first-type subband based on the frequency domain resource information of the first-type subband indicated in the frequency domain resource information of the first-type subband, and determine a starting position or an ending position of a guard subband based on the starting position and/or the ending position of the first-type subband — 112

Receive a configuration message of the guard subband from the base station, the configuration message of the guard subband including a length of the guard subband — 113

Determine a guard subband resource from a BWP using the starting position of the guard subband and the length of the guard subband, or determine the guard subband resource from the BWP based on the ending position of the guard subband and the length of the guard subband — 114

Fig. 1A

## Description

### TECHNICAL FIELD

The present application relates to the field of communication technology, and more particularly, to a method, an apparatus, and a device determining subband resources.

### BACKGROUND

TDD (Time Division Duplex) systems are widely used in mobile communication systems, such as 5G systems. In a TDD system, a frame structure can be divided into DL (DownLink) slots, UL (UpLink) slots, and Flexible slots.
The DL slot includes a plurality of DL symbols, and downlink data is processed in frequency domain resources corresponding to these DL symbols. The UL slot includes a plurality of UL symbols, and uplink data is processed in frequency domain resources corresponding to these UL symbols. The Flexible slot includes at least one F (Flexible) symbol, which can be used for DL, that is, processing downlink data in frequency domain resources corresponding to the F symbols. The F symbols can also be used for UL, that is, processing uplink data in frequency domain resources corresponding to the F symbols. The F symbols can also be used for GP (Guard Period), that is, protecting uplink and downlink switching in frequency domain resources corresponding to the F symbols.
A TDD system can operate in an HD (Half Duplex) mode, that is, at a same time, a same frequency domain resource can only be used for either UL or DL.

### SUMMARY

The application provides a method for determining subband resources, applied to a user equipment. The method includes:

receiving a subband resource indication message from a base station, the subband resource indication message including frequency domain resource information of a first-type subband;
determining a starting position and/or an ending position of the first-type subband based on the frequency domain resource information of the first-type subband indicated in the frequency domain resource information of the first-type subband, and determining a starting position or an ending position of a guard subband based on the starting position and/or the ending position of the first-type subband;
receiving a configuration message of the guard subband from the base station, the configuration message of the guard subband including a length of the guard subband;
determining a guard subband resource from a BWP using the starting position of the guard subband and the length of the guard subband, or determining the guard subband resource from the BWP based on the ending position of the guard subband and the length of the guard subband.

The application provides a method for determining subband resources, applied to a base station. The method includes:

sending a subband resource indication message to a user equipment, the subband resource indication message including frequency domain resource information of a first-type subband; wherein the subband resource indication message is used to indicate the user equipment to determine a starting position and/or an ending position of the first-type subband according to the frequency domain resource of the first-type subband indicated in the frequency domain resource information of the first-type subband, and to determine a starting position or an ending position of a guard subband based on the starting position and/or the ending position of the first-type subband;
sending a configuration message of a guard subband to the user equipment, the configuration message of the guard subband including a length of the guard subband; wherein the configuration message is used to indicate that the user equipment to determine a guard subband resource from a BWP using the starting position of the guard subband and the length of the guard subband, or to determine a guard subband resource from the BWP based on the ending position of the guard subband and the length of the guard subband.

The application provides an apparatus for determining subband resources, applied to a user equipment. The apparatus includes:

a receiving module configured to receive a subband resource indication message from a base station, the subband resource indication messages including frequency domain resource information of the first-type subband;

a determining module configured to determine a starting position and/or an ending position of the first-type subband based on the frequency domain resource information of the first-type subband indicated in the frequency domain resource information of the first-type subband, and determine a starting position or an ending position of a guard subband based on the starting position and/or the ending position of the first-type subband;

the receiving module further configured to receive a configuration message of the guard subband from the base station, and the configuration messages of the guard subband including a length of the guard subband;

the determining module further configured to determine a guard subband resource from a BWP using the starting position of the guard subband and the length of the guard subband, or to determine the guard subband resource from the BWP based on the ending position of the guard subband and the length of the guard subband

The application provides an apparatus for determining subband resources, applied to a base station. The apparatus includes:

an obtaining module configured to obtain frequency domain resource information of a first-type subband;

a transmission module configured to send a subband resource indication message to a user equipment, the subband resource indication message including frequency domain resource information of the first-type subband; wherein the subband resource indication message is used to indicate the user equipment to determine a starting position and/or an ending position of the first-type subband according to the frequency domain resource of the first-type subband indicated in the frequency domain resource information of the first-type subband, and to determine a starting position or an ending position of a guard subband based on the starting position and/or the ending position of the first-type subband;

the obtaining module further configured to obtain a length of the guard subband;

the transmission module further configured to send a configuration message of a guard subband to the user equipment, the configuration message of the guard subband including a length of the guard subband; wherein the configuration message is used to indicate that the user equipment to determine a guard subband resource from a BWP using the starting position of the guard subband and the length of the guard subband, or to determine a guard subband resource from the BWP based on the ending position of the guard subband and the length of the guard subband.

The application provides a user equipment including a processor and a machine-readable storage medium, wherein the machine-readable storage medium stores machine executable instructions that can be executed by the processor; and the processor is configured to execute the machine executable instructions to implement the method for determining subband resources in the above examples.

The application provides a base station including a processor and a machine-readable storage medium, wherein the machine-readable storage medium stores machine executable instructions that can be executed by the processor; and the processor is configured to execute machine executable instructions to implement the method for determining subband resources in the above examples.

From the above technical solution, it can be seen that the UE (User Equipment) determines the starting position or the ending position of the guard subband based on the subband resource indication message. The UE determines the length of the guard subband based on the configuration message of the guard subband, determines the guard subband resource from the BWP, and distinguishes the uplink subband resource, downlink subband resource, and guard subband resource in the BWP. The UE utilizes SBFD subband resources (including uplink and downlink subband resources) for data transmission to improve resource utilization, increase network coverage and capacity, and reduce transmission latency.

## BRIEF DESCRIPTION OF THE DRAWINGS

Figs. 1A and 1B are flow diagrams of a method for determining subband resources in an example;

Fig. 2 is a schematic diagram of configuration of an uplink subband resource and a guard subband resource in an example;

Fig. 3 is a schematic diagram of a frame structure of a semi static configuration in an example;

Figs. 4A and 4B are structural diagrams of an apparatus for determining subband resources in an example;

Fig. 5A is a schematic diagram of a structure of a user equipment in an example;

Fig. 5B is a schematic diagram of a structure of a base station in an example.

**DETAILED DESCRIPTION OF THE EMBODIMENTS**

The terms used in the present disclosure are for the purpose of describing particular examples only, and are not intended to limit the present disclosure. Terms determined by "a", "the" and "said" in their singular forms in the present disclosure and the appended claims are also intended to include plurality, unless explicitly indicated otherwise in the context. It should also be understood that the term "and/or" as used herein is and includes any and all possible combinations of one or more of the associated listed items.

It is to be understood that, although terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, second information may also be referred as first information. Depending on the context, the word "if" as used herein may be interpreted as "when" or "upon" or "in response to determining".

A TDD system can operate in an HD mode, that is, at a same time, a same frequency domain resource can only be used for either UL or DL. In order to make more flexible use of frequency domain resources and improve resource utilization, a TDD system can also operate in an FD (Full Duplex) mode. At a same time, a same frequency domain resource is used for both UL and DL, that is, both uplink and downlink data are processed simultaneously on the same frequency domain resource.

In a TDD system, a frame structure is divided into DL slots, UL slots, and flexible slots (F slots). Once the frame structure is determined, UE can transmit and receive data according to the frame structure. For a UE using HD (Half Duplex) mode, a base station (such as gNB) schedules the UE to transmit or receive data based on the frame structure. For a UE using FD mode, a base station schedules the transmission, reception, or simultaneous transmission and reception of the UE based on the frame structure. Accordingly, the base station can configure the frame structure and notify the UE of the frame structure, so that the UE can know the frame structure and properly transmit and receive data. From another perspective, after obtaining the frame structure, the UE can identify potential inter UE interference and adopt interference cancellation techniques to reduce interference and improve communication reliability.

In an example, in a TDD system, for a frame structure mainly for uplink transmission, there are usually configured more UL slots, which results in fewer DL slots, limiting the downlink transmission rate and increasing the transmission delay for downlink data, and resulting in a larger downlink transmission delay, which is undesirable for downlink services.

In an example of this application, a method for determining subband resources is provided by configuring flexible downlink and uplink subband resources for UE in BWP. For example, it is possible to use downlink slots or flexible slots to configure an uplink subband resource and transmit uplink data within the uplink subband resource, thereby improving the uplink transmission rate and reducing the transmission delay for uplink data through downlink slots or flexible slots. In addition, uplink slots or flexible slots can be used to configure a downlink subband resource, and downlink data can be transmitted within the downlink subband resource. By transmitting downlink data through uplink slots or flexible slots, the downlink transmission rate can be improved and the transmission delay for downlink data can be reduced.

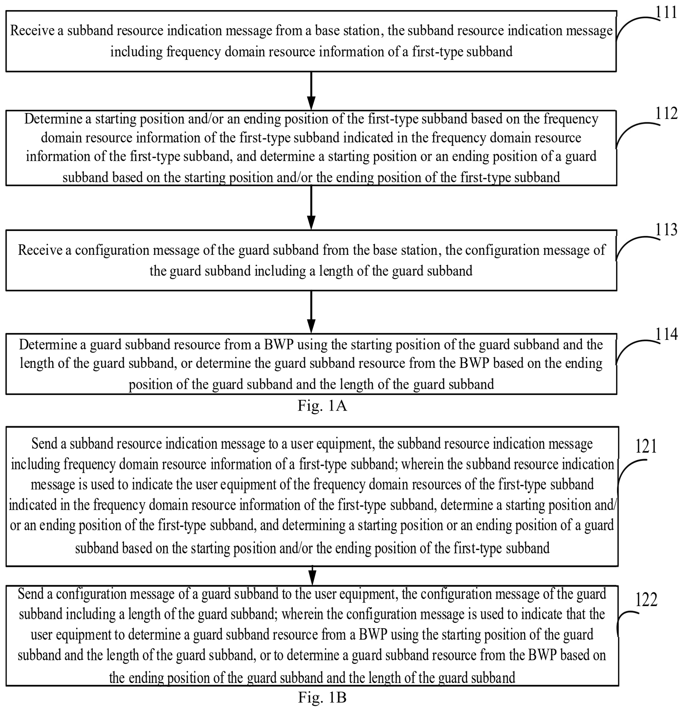

In an example of this application, a method for determining subband resources is provided, which can be applied to a UE, as shown in Fig. 1A, which is a flowchart of the method for determining subband resources. The method can include the following steps.

Step 111: a subband resource indication message is received from a base station, where the subband resource indication message can include frequency domain resource information of a first-type subband; the first-type subband can be an uplink subband or a downlink subband.

Step 112: a starting position and/or an ending position of the first-type subband is determined based on the frequency domain resource information of the first-type subband indicated in the frequency domain resource information of the first-type subband, and a starting position or an ending position of a guard subband is determined based on the starting position and/or the ending position of the first-type subband.

Step 113: a configuration message of the guard subband is received from the base station, where the configuration message of the guard subband can include a length of the guard subband, such as how many PRBs the guard subband occupies.

Step 114: a guard subband resource is determined from a BWP using the starting position of the guard subband and the length of the guard subband, or a guard subband resource is determined from the BWP based on the ending position of the guard subband and the length of the guard subband.

Here, the BWP is used to configure SBFD frequency domain resources (i.e. SBFD subband resources), and SBFD subband resources can include uplink and downlink subband resources. Therefore, the BWP is used to configure uplink and downlink subband resources. However, the BWP can also be used to configure a guard subband resource (guard subband resource does not belong to a SBFD subband resource), so guard subband resource can be determined from the BWP.

In an example of this application, a method for determining subband resources is provided, which can be applied to a base station, as shown in Fig. 1B, which is a flowchart of the method for determining subband resources. The method can include the following steps.

Step 121: a subband resource indication message is sent to a UE, where the subband resource indication message includes frequency domain resource information of the first-type subband. Here, the subband resource indication message is used to indicate the UE to determine a starting position and/or an ending position of the first-type subband based on a frequency domain resource indicated in the frequency domain resource information, and to determine a starting position or an ending position of a guard subband based on the starting position and/or the ending position of the first-type subband.

Step 122: a configuration message of the guard subband is sent to the UE, where the configuration message includes a length of the guard subband. Here, the configuration message is used to indicate the UE to determine a guard subband resource from a BWP using the starting position of the guard subband and the length of the guard subband, or to determine a guard subband resource from a BWP based on the ending position of the guard subband and the length of the guard subband.

In one example, the configuration message for the guard subband can be a semi static configuration message. The base station can send a semi static configuration message to the UE, and the UE can receive the semi static configuration message from the base station. The semi static configuration message includes the length of the guard subband, that is, the UE can obtain the length of the guard subband from the semi static configuration message.

In one example, the configuration message for protecting the subband can be a semi static configuration message and a dynamic configuration message. The base station can send a semi static configuration message to the UE, and the UE can receive the semi static configuration message from the base station. The semi static configuration message includes a list of subband lengths, and the list of subband lengths can include lengths of a plurality of guard subbands. Then, the base station can send a dynamic configuration message to the UE, and the UE can receive the dynamic configuration message from the base station. The dynamic configuration message includes index information, and the index information is used to indicate to select a length of a guard subband corresponding to the index information from the list of subband lengths. In this case, the UE can obtain the index information from the dynamic configuration message and obtain the length of the guard subband based on the index information.

In one example, the UE determining the starting position or the ending position of the guard subband based on the starting position and/or the ending position of the first-type subband can include: if the first-type subband is located on an upper boundary of the BWP, determining the ending position of the guard subband based on the starting position of the first-type subband. Alternatively, if the first-type subband is located at a lower boundary of the BWP, determining the starting position of the guard subband based on the ending position of the first-type subband. Alternatively, if the first-type subband is located in the middle position of the BWP, determining the starting position of the guard subband on the upper side of the first-type subband based on the ending position of the first-type subband, and determining the ending position of the guard subband on the lower side of the first-type subband based on the starting position of the first-type subband.

In one example, the frequency domain resource information of the first-type subband can include a Bitmap configuration of a subband resource group occupied by the first-type subband. Here, if the Bitmap configuration indicates that a subband resource group corresponds to a first value, the subband resource group is occupied by the first-type subband. If the Bitmap configuration indicates that a subband resource group corresponds to a second value, the subband resource group is not occupied by the first-type subband. In this case, the UE can determine a frequency domain resource occupied by the first-type subband based on the Bitmap configuration of the subband resource group occupied by the first-type subband. Here, the first value and the second value can be set based on experience, such as the first value being 1 and the second value being 0.

In an example, the frequency domain resource information of the first-type subband can include a first subband resource indication value corresponding to the first-type subband. The first subband resource indication value is determined by a position of a starting physical resource block of the first-type subband and a number of consecutive physical resource blocks occupied by the first-type subband. In this case, the UE can derive the position of the starting physical resource block of the first-type subband and the number of consecutive physical resource blocks occupied by the first-type subband based on the first subband resource indication value, and then determine a frequency domain resource occupied by the first-type subband based on the position of the starting physical resource block of the first-type subband and the number of consecutive physical resource blocks occupied by the first-type subband.

The process of obtaining the first subband resource indication value includes: if

$$(\mathrm{L_{PRB}} - 1) \leq \left\lceil N_{BWP}^{size}/2 \right\rceil$$, determining the first subband resource indication value as follows:

$$SBRIV = \mathrm{N}_{BWP}^{size} * (\mathrm{L_{PRB}} - 1) + \mathrm{PRB}_{Start}$$; otherwise, determining the first subband resource indication value as follows: $$SBRIV = N_{BWP}^{size} * \left(N_{BWP}^{size} - L_{PRB} + 1\right) + \left(N_{BWP}^{size} - 1 - PRB_{Start}\right)$$. Where $L_{PRB}$ represents a number of consecutive physical resource blocks occupied by the first-type subband, $N_{BWP}^{size}$ represents a total number of physical resource blocks in the BWP where the first-type subband is located, *SBRIV* represents a first subband resource indication value, *PRB$_{start}$* represents a position of a starting physical resource block of the first-type subband. Based on the above formulas, when the first subband resource indication value *SBRIV* is known, the UE can derive the position of the starting physical resource block and the number of consecutive physical resource blocks occupied by the first subband.

In an example, the frequency domain resource information of the first-type subband can include a second subband resource indication value corresponding to the first-type subband. The second subband resource indication value is determined by a position of a starting subband resource group of the first-type subband and a number of consecutive subband resource groups occupied by the first-type subband. In this case, the UE can derive the position of the starting subband resource group and the number of consecutive subband resource groups occupied by the first subband based on the second subband resource indication value, and then determine a frequency domain resource occupied by the first subband based on the position of the starting subband resource group and the number of consecutive subband resource groups occupied by the first subband.

The process of obtaining the second subband resource indication value includes: if

$$(L_{SBG} - 1) \le \lfloor N_{SBG}/2 \rfloor$$

, determining the second subband resource indication value as follows: *SBRIV = N$_{SBG}$* * (L$_{SBG}$ - 1) + SBG$_{start}$; otherwise, determining the second subband resource indication value as follows: *SBRIV = N$_{SBG}$* * (N$_{SBG}$ - L$_{SBG}$ + 1) + (N$_{SBG}$ - 1 - SBG$_{start}$). Where *L$_{SBG}$* represents a number of consecutive subband resource groups occupied by the first-type subband, *N$_{SBG}$* represents a total number of subband resource groups in the BWP where the first-type subband is located, *SBRIV* represents the second subband resource indication value, SBG$_{start}$ represents the position of the starting subband resource group of the first-type subband. Based on the above formulas, when the second subband resource indication value *SBRIV* is known, the UE can derive the position of the starting subband resource group of the first-type subband and the number of consecutive subband resource groups occupied by the first-type subband.

In one example, before the base station sends a subband resource indication message to the UE, the base station can also send a subband configuration type indication message to the UE, and the UE can receive the subband configuration type indication message from the base station. Here, if the subband configuration type indication message is used to indicate a Bitmap type, it indicates that the subband resource indication message carries a Bitmap configuration of the subband resource group occupied by the first-type subband. That is, the UE determines a frequency domain resource occupied by the first-type subband based on the Bitmap configuration of the subband resource group occupied by the first-type subband.

Alternatively, if the subband configuration type indication message is used to indicate a SBRIV type, it indicates that the subband resource indication message carries a first subband resource indication value corresponding to the first-type subband. That is, the UE can parse the first subband resource indication value SBRIV and derive the position of the starting physical resource block and the number of consecutive physical resource blocks occupied by the first-type subband based on the first subband resource indication value SBRIV.

Alternatively, if the subband configuration type indication message is used to indicate a SBRIV and SBG type, it indicates that the subband resource indication message carries a second subband resource indication value corresponding to the first-type subband. That is, the UE can parse the second subband resource indication value SBRIV, and based on the second subband resource indication value SBRIV, derive the position of the starting subband resource group of the first-type subband and the number of consecutive subband resource groups occupied by the first-type subband.

In an example, after the UE determines the guard subband resource from the BWP, if the frequency domain resource of the first-type subband is an uplink subband resource, a downlink subband resource is determined from the BWP based on the uplink subband resource and the guard subband resource. If the frequency domain resource of the first-type subband is a downlink subband resource, an uplink subband resource is determined from the BWP based on the downlink subband resource and the guard subband resource.

In one example, the BWP can include a plurality of subband resource groups. After the UE determines the guard subband resource from the BWP, if the subband resource group is a frequency domain resource group that includes an uplink subband resource and a guard subband resource, uplink data is transmitted on the uplink subband resource of the subband resource group, or uplink data is prohibited from being transmitted on the uplink subband resource of the subband resource group. If the subband resource group is a subband resource group that includes a downlink subband resource and a guard subband resource, then downlink data is received on the downlink subband resource of the subband resource group, or downlink data is prohibited from being received on the downlink subband resource of the subband resource group.

In one example, the first-type subband can be a frequency domain resource configured on SBFD symbols. The base station can send a frame structure configuration message to the UE, and the UE can receive a frame structure configuration message from the base station. The frame structure configuration message includes a starting symbol of the SBFD symbols and a length of the SBFD symbols. Here, the frame structure configuration message can be a semi static frame structure configuration message. If the frame structure configuration message is a semi static frame structure configuration message, then the frame structure configuration message is TDD-UL-DL-ConfigCommon (public configuration) or TDD-UL-DL-ConfigDedicated (dedicated configuration) in an RRC message.

Here, a starting symbol of the SBFD symbols and a length of the SBFD symbols are used to determine all of the SBFD symbols used to configure the first-type subband. For example, the starting symbol of the SBFD symbols represents a first symbol of the SBFD symbols in the frame structure, and the length of the SBFD symbols represents a number of consecutive symbols, including the starting symbol, counted forward from the starting symbol. Alternatively, the starting symbol of the SBFD symbols represents a last symbol of the SBFD symbols in the frame structure, and the length of the SBFD symbols represents a number of consecutive symbols, including the starting symbol, counted backward from the starting symbol.

In one example, the first-type subband can be a frequency domain resource configured on SBFD symbols. The base station sends an RRC message to the UE, and the UE receives the RRC message from the base station. The RRC message includes a plurality of slot format combinations, and each of the slot format combinations includes slot format types used to indicate SBFD symbols.

The base station can send a DCI message to the UE, and the UE receives the DCI message from the base station. The DCI message includes an index of a target slot format combination. After receiving the DCI message, the UE selects a corresponding target slot format combination from the plurality of slot format combinations based on the index of the target slot format combination. Based on the target slot format combination, the UE determines all of the SBFD symbols used to configure the first-type subband.

From the above technical solution, it can be seen that the UE determines the starting position or the ending position of the guard subband based on the subband resource indication message. The UE determines the length of the guard subband based on the configuration message of the guard subband, determines the guard subband resource from the BWP, and distinguishes the uplink subband resource, downlink subband resource, and guard subband resource in the BWP. The UE utilizes SBFD subband resources (including uplink and downlink subband resources) for data transmission to improve resource utilization, increase network coverage and capacity, and reduce transmission latency.

The following is an example to illustrate the above technical solution of this application.

In the TDD system, the frame structure is divided into UL slots, DL slots, and flexible slots (F slots). The symbols in the flexible slots can be configured as UL symbols, DL symbols, and F symbols, which can be used for UL, DL, or GP. Here, uplink data can be transmitted in UL slots, UL symbols or F symbols in flexible slots, while uplink data cannot be transmitted in DL slots, nor in DL symbols in flexible slots. Downlink data can be transmitted in DL slots, DL symbols in flexible slots, or F symbols. Downlink data cannot be transmitted in UL slots, nor in UL symbols in flexible slots.

Full duplex communication can be achieved through SBFD, that is, SBFD subband resources (i.e. frequency domain resources) can be configured in a BWP (BandWidth Part), and SBFD subband resources can include uplink and downlink subband resources. In this way, at the same time, data in different directions of frequency domain resources can be transmitted over a SBFD subband resource. For example, configuring a SBFD subband resource in a BWP of a DL slot and transmitting uplink data over the SBFD subband resource enables uplink data to be transmitted in the DL slot; configuring a SBFD subband resource in a BWP of DL symbols in a flexible slot, and transmitting uplink data over the SBFD subband resource enables uplink data to be transmitted in the DL symbols in the flexible slot.

Configuring a SBFD subband resource in a BWP of an UL slot, and transmitting downlink data over the SBFD subband resource enables downlink data to be transmitted in the UL slot. Configuring a SBFD subband resource in a BWP of UL symbols in a flexible slot, transmitting downlink data over the SBFD subband resource enables downlink data to be transmitted in the UL symbols in the flexible slot.

In one example, SBFD subband resources can be frequency domain resources in SBFD slots or SBFD symbols, and SBFD symbols can be defined as symbols of SBFD subbands. Over these SBFD subbands of SBFD symbols, the base station and the UE can communicate in full duplex, that is, over the SBFD subband resources, uplink transmission, downlink transmission, or simultaneous uplink and downlink transmission can be carried out.

Here, SBFD subband resources can be explicitly indicated as uplink, downlink, or flexible. When the SBFD subband resource is indicated as Flexible, it can be flexibly scheduled uplink or downlink in the SBFD subband resource. If the SBFD subband resource is not explicitly indicated, it means it is flexible and can be used to transmit uplink or downlink data. The configuration of SBFD symbols can include which symbols in DL slots, UL slots, and F slots are used for SBFD transmission, and an implementation period and a starting point.

Here, a SBFD subband resource indicated as uplink is referred to as an uplink subband resource, abbreviated as UL SB, which means a SBFD subband resource used for uplink. A SBFD subband resource indicated as downlink is referred to as a downlink subband resource, abbreviated as DL SB, which means a SBFD subband resource used for downlink. A frequency domain resource indicated as a guard subband is referred to as a guard subband resource, abbreviated as GB, which is used for a guard subband.

Here, for a half duplex UE that supports SBFD function, the UE can obtain a configuration related to a SBFD subband resource, but at the same time (symbol), the UE can only receive DL data or send UL data.

The base station configures SBFD subband resources for half duplex UE that supports SBFD function. SBFD subband resources are configured in DL slots or DL symbols for the UE, and SBFD subband resources are used to transmit UL data, that is, SBFD subband resources can be uplink subband resources. The DL symbols configured with SBFD subband resources are SBFD symbols, and in the SBFD symbols, in addition to the uplink subband resources, there are downlink subband resources and guard subband resources. The guard subband resources are located between the uplink subband resources and the downlink subband resources.

SBFD subband resources are configured in UL slots or UL symbols for the UE, and SBFD subband resources are used to transmit DL data, that is, SBFD subband resources can be downlink subband resources. The UL symbols configured with SBFD subband resources are SBFD symbols, and in the SBFD symbols, in addition to the downlink subband resources, there are uplink and guard subband resources. The guard subband resources are located between the uplink and downlink subband resources.

SBFD subband resources are configured in the F slots or F symbols for the UE, and SBFD subband resources are used to transmit DL data (or UL data), that is, SBFD subband resources can be downlink subband resources (or uplink subband resources). The F symbols configured with SBFD subband resources are SBFD symbols, and in the SBFD symbols, in addition to the downlink subband resources (or uplink subband resources), there are uplink subband resources (or downlink subband resources) and guard subband resources. The guard subband resources are located between the uplink subband resources and the downlink subband resources.

In one example, the base station in subsequent embodiments is a full duplex base station that can simultaneously process DL data and UL data. The UE in subsequent embodiments is a half duplex UE that supports the SBFD function, and can only process DL or UL data at the same time, and can obtain all configuration parameters of SBFD.

To support FD communication, SBFD subband resources can be configured semi statically, such as through RRC (Radio Resource Control) signaling semi statically, or dynamically, such as through DCI (Downlink Control Information).

The time domain resources of SBFD, namely the frame structure of SBFD, can be configured through semi static configuration or semi static configuration with dynamic indication. The SBFD symbols can also be changed based on dynamic indication.

Firstly, configuration of a guard subband resource.

When configuring downlink and uplink subband resources in BWP, a guard bandwidth (i.e., guard subband resources) needs to be configured between the downlink and uplink subband resources. By the guard subband resource, interference between subbands can be reduced, i.e., the guard subband resource needs to be configured in a BWP.

For example, uplink subband resources (UL SB) and guard subband resource (GB) can be configured in a BWP, and then the downlink subband resource (DL SB) can be implicitly obtained, that is, the remaining resource in the BWP apart from the uplink and guard subband resources is the downlink subband resource.

For example, the downlink subband resource and the guard subband resource can be configured in a BWP. Based on the downlink subband resource and the guard subband resource, the uplink subband resource can be implicitly determined, that is, the remaining resource in the BWP apart from the downlink subband resource and guard subband resource is the uplink subband resource.

For example, uplink and downlink subband resources can be configured in a BWP. Based on the uplink and downlink subband resources, it can be implicitly inferred that the remaining resource in the BWP apart from the uplink and downlink subband resources is the guard subband resource.

In an example, the frequency domain resource and the guard subband resource of the first-type subband can be configured, and then the frequency domain resource of the second-type subband can be implicitly obtained, that is, the frequency domain resource and the guard subband resource of the first-type subband can be explicitly configured. Here, the frequency domain resource of the first-type subband can be an uplink subband resource, and the frequency domain resource of the second-type subband can be a downlink subband resource, that is, the uplink subband resource and guard subband resource can be explicitly configured. Alternatively, the frequency domain resource of the first-type subband can be a downlink subband resource, while the frequency domain resource of the second-type subband can be an uplink subband resource, that is, the downlink subband resource and the guard subband resource can be explicitly configured.

In an example, in order to explicitly configure the guard subband resource, the following method can be performed.

The base station indicates the uplink subband resource. By removing the total number of PRBs occupied by the uplink subband resource and the specific frequency domain location, and the total number of PRBs occupied by the guard subband resource and the specific frequency domain location, the remaining is the total number of PRBs occupied by the downlink subband resource and the specific frequency domain location. At this time, the guard subband resource can be explicitly indicated or 0. There are two methods for indicating frequency domain resources of the guard subband resource: indicating the starting PRB and the total number of occupied frequency domains (M * N), as shown in Table 1. This is the first method for indicating frequency domain resources of the guard subband resource. Alternatively, calculating the total number of occupied frequency domain resources based on the starting and ending positions of the frequency domain resource, as shown in Table 2. This is the second method for indicating frequency domain resources of the guard subband resource.

Table 1

| Signaling IE | Length of Bits | Description |
|---|---|---|
| Numeral reference of the starting PRB of protection subband resource | B | starting position of protection subband resource |
| Indication of allocation of frequency resources | N | N denotes a number of frequency domain resource units occupied by uplink subband resource |
| frequency domain resource RB/RBG unit indicator | M | 1, 2, 4, 8. 16, and so non, if no such indication domain, 1RB/RBG in default |

Table 2

| Signaling IE | Length of Bits | Description |
|---|---|---|
| Numeral reference of the starting PRB of protection subband resource | B | starting position of protection subband resource |
| Numeral reference of the ending PRB of protection subband resource | C | ending position of protection subband resource |

For the first method for indicating frequency domain resources of the guard subband resource, the guard subband resource is indicated with the starting position, frequency domain resource allocation indicator, and frequency domain resource unit indicator. Assuming the number of PRBs in the BWP is $N_{PRB}$, the starting position requires $\log2(N_{PRB})$ bit data, and the optional number of frequency domain resource unit indicator (P) is N, then log2 (N) bits are required. The frequency domain resource allocation indicator is the number of frequency domain resource PRBs divided by the frequency domain resource unit indicator, and then rounded up to ceil($N_{PRB}$/P) bits. Taking a 100MHz bandwidth as an example, which includes 273 PRBs and 5 optional frequency domain resource units in Table 1. For example, P=16PRB, $\log2(N_{PRB})$ + log2(N) + ceil($N_{PRB}$/P) = 9 + 18 + 3 = 30 bits are required. If the uplink subband resource is located in the middle position of the BWP, two guard bandwidths, namely 60 bits, are required between the uplink subband resource and the downlink subband resource.

The second method for indicating frequency domain resources of the guard subband resource is represented by stardting and ending positions. Assuming that the number of PRBs in the BWP is $N_{PRB}$. The starting and ending positions need to be explicitly indicated, and a guard bandwidth requires 2*$\log2(N_{PRB})$ bits. Taking a 100MHz bandwidth as an example, a single guard bandwidth requires 18 bits. If the uplink subband resource is located in the middle position of the BWP, two guard bandwidths, namely 36 bits, are required between the uplink and downlink subband resources.

Both the first and second indication methods require more bits to indicate the guard subband resource, which greatly increases signaling overhead and reduces data transmission rate.

In response to the above facts, in order to explicitly configure the guard subband resource, the following method can be used. The base station sends a configuration message for the guard subband to the UE, the UE receives the configuration message for the guard subband, and the configuration message for the guard subband includes a length of the guard subband. The UE can use the starting position and/or the ending position of the first-type subband to determine the starting position or the ending position of the guard subband, and then determine the guard subband resource from the BWP using the starting position of the guard subband and the length of the guard subband, or determine the guard subband resource from the BWP based on the ending position of the guard subband and the length of the guard subband.

For example, when explicit configuration of guard subband resource is required, it can be achieved through semi static or dynamic configuration, and the guard subband resource can be configured together with the frequency domain resource of the first-type subband (such as uplink subband resource). The length of the guard subband can be flexibly configured according to actual scenarios, such as in scenarios with highly faded frequency selectivity, configuring a longer guard bandwidth is desirable to reduce inter subband interference. By explicitly configuring the guard subband resource, it can adapt to the needs of different scenarios.

When using a semi static configuration, the configuration message for the guard subband can be a semi static configuration message, that is, the guard subband resource is configured to the UE through a semi static configuration message (such as an RRC message). The base station can select the length of the guard subband from a set of optional lengths, and then send the length of the guard subband to the UE through an RRC message. The UE obtains the length of the guard subband from the RRC message according to the agreement between the base station and the UE.

For example, the length of the guard subband can be {1,2,3,4,5,6,7,8,16} and so on, and however, it is possible to configure only some typical values, such as {1,2,4,6,8}, and so on. However, the above are only a few examples of optional lengths, and there is no restriction on this. The optional values of the length of the guard subband can be set as desired. The length of the guard subband is an optional parameter. If not configured, the guard bandwidth between UL and DL is ensured through dynamic scheduling of the base station.

An example of configuration parameters through an RRC message is as follows:
GuardBandSizeInSbfd enumerate {1,2,3,4,5,6,7,8}, optional

For example, the base station can select a value from {1,2,3,4,5,6,7,8} as the length of the guard subband, and the base station can send the length of the guard subband to the UE through this RRC message.

When using dynamic configuration, the configuration message for the guard subband can be a semi static configuration message and a dynamic configuration message, the semi static configuration message can be an RRC message, and the dynamic configuration message can be a DCI message.

The base station can send an RRC message to the UE, which can be used to send an optional list of guard bandwidths (also known as a subband length list) to the UE. The guard bandwidth list can include the lengths of multiple guard subbands. An example of a guard bandwidth list is as follows: sbfdGuardBandList sequence {1,2,3,4,5,6,7,8}, which means that the lengths of multiple guard subbands can be {1,2,3,4,5,6,7,8}, without any restrictions.

Then, the base station can send a DCI message to the UE, and the base station sends a guard bandwidth indicator to the UE through the DCI message. The guard bandwidth indicator is index information, and the index information is used to indicate the index value of the guard bandwidth list, that is, represents which guard subband length in the guard bandwidth list.

Here, the size of the guard bandwidth indicator is log2 (sizeof (sbfdGuardBandList). Referring to the guard bandwidth list above, the bit size occupied by the guard bandwidth indicator is log2 (8)=3 bits. 0 corresponds to the first value in the guard bandwidth list, 1 corresponds to the second value in the guard bandwidth list, and so on.

Here, a new parameter can be introduced in the DCI message to represent the guard bandwidth indicator. For example, an example of the guard bandwidth indicator is as follows: sbfdGuardBandIndicator.

Based on the guard bandwidth indicator in the DCI message, the UE can select the length of the guard subband corresponding to the guard bandwidth indicator from the list of subband lengths to obtain the length of the guard subband.

In one example, the guard subband resource is configured to be of a fixed size and adjacent to the frequency domain resource of the first-type subband (such as uplink or downlink subband resource). In addition to the frequency domain resource of the first-type subband and the guard subband resources, the remaining part is the frequency domain resource of the second type subband (such as downlink or uplink subband resource). The number of guard subband resources is determined based on the location of the frequency domain resource of the first-type subband.

For example, if the frequency domain resource of the first-type subband is located in the middle position of the BWP, there are two guard subband resources, located between the frequency domain resource of the first-type subband and the frequency domain resource of the second-type subband on both sides. If the frequency domain resource of the first-type subband is located at one end of the BWP, there is only one guard subband resource, and the guard subband resource is located between the frequency domain resource of the first-type subband and the frequency domain resource of the second-type subband.

If the frequency domain resource of the first-type subband is not configured from the BWP edge, and the number of PRBs between the BWP edge and the closest PRB in the frequency domain resource the first-type subband is less than the number of guard subband resources, then there is no frequency domain resource of the second-type subband between the BWP edge and the frequency domain resource of the first-type subband.

In one example, the UE can determine the starting position or the ending position of the guard subband based on the starting position and/or the ending position of the first-type subband, and then use the starting position of the guard subband and the length of the guard subband to determine the guard subband resource from the BWP, or use the ending position of the guard subband and the length of the guard subband to determine the guard subband resource from the BWP.

Here, if the first-type subband is located at the upper boundary of the BWP, the UE can determine the ending position of the guard subband from the starting position of the first-type subband. Alternatively, if the first-type subband is located at the lower boundary of the BWP, the UE can determine the starting position of the guard subband from the ending position of the first-type subband. Alternatively, if the first-type subband is located in the middle position of the BWP, the UE can determine the starting position of the guard subband on the upper side of the first-type subband from the ending position of the first-type subband, and determine the ending position of the guard subband on the lower side of the first-type subband from the starting position of the first-type subband.

After the UE determines the guard subband resource, the frequency domain resource of the second-type subband can be determined from the BWP based on the frequency domain resource of the first-type subband and the guard subband resources. For example, if the frequency domain resource of the first-type subband is an uplink subband resource, the downlink subband resource is determined from the BWP based on the uplink subband resource and the guard subband resource. If the frequency domain resource of the first-type subband is a downlink subband resource, the uplink subband resource is determined from the BWP based on the downlink subband resource and the guard subband resource.

Here, the frequency domain resource unit indicator can be used to determine the granularity of the frequency domain resource group of the subband. The frequency domain resource group of the subband is also known as SBG, and the granularity of SBG can be equal to RBG.

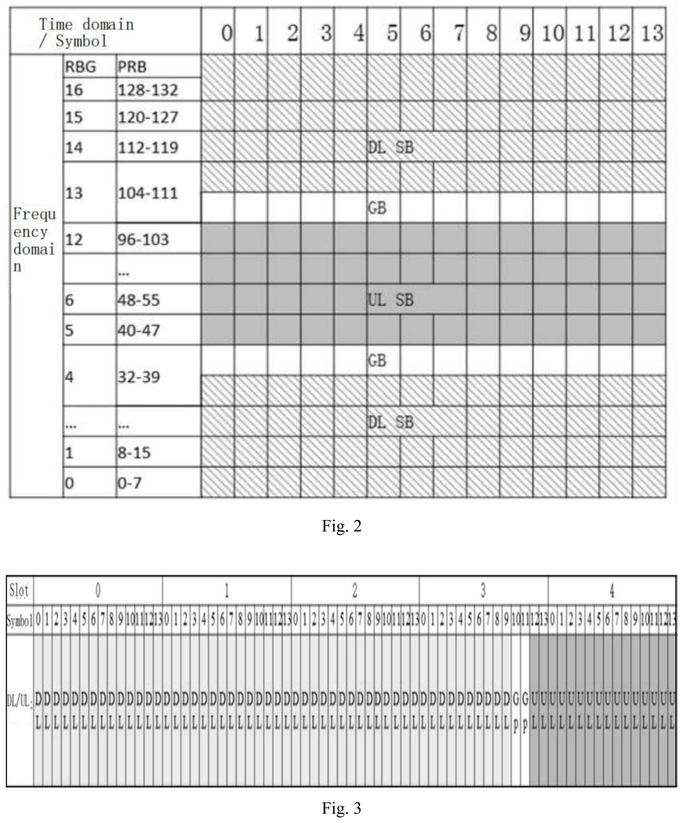

Taking the frequency domain resource of the first-type subband being an uplink subband resource as an example, as shown in Fig. 2, a schematic diagram of the configuration of uplink subband resource and guard subband resource is provided. The uplink subband resource is located in the middle position of the BWP, and the BWP can include 17 SBGs (Subband Group, also known as Subband Resource Granularity), and the SBG is equal to the RBG, that is, the BWP includes 17 RBGs, as shown in RBG0-RBG16 in Fig. 2.

As shown in Fig. 2, the size of RBG is 8 PRBs. Due to the limitation of the total number of PRBs, the number of PRBs corresponding to the last RBG can be less than or equal to 8 PRBs. For example, RBG0 corresponds to PRB0-7, RBG1 corresponds to PRB8-15,..., and RBG16 corresponds to PRB128-132.

As shown in Fig. 2, assuming that the uplink subband resource is located in the middle position of the BWP, there are two guard subband resources. One guard subband resource corresponds to RBG4, and the size of the guard subband resource is 4 PRBs. For example, the guard subband resource corresponds to PRB36-39, which is located between the uplink and downlink subband resources. Apparently, for the guard subband resource, the UE can determine the ending position (i.e. the 39th PRB) of the guard subband on the lower side of the uplink subband resource from the starting position (i.e. the 40th PRB) of the uplink subband resource.

The other guard subband resource corresponds to RBG13, with a size of 4 PRBs, such as PRB104-107. The guard subband resource is located between the uplink and downlink subband resources. Apparently, for this guard subband resource, the UE can determine the starting position (i.e. the 104th PRB) of the guard subband on the upper side of the uplink subband resource from the ending position (i.e. the 103rd PRB) of the uplink subband resource (UL SB).

In one example, the size of the guard subband resource and the size of the RBG may be different, and there may be misalignment between the two. This means that the RBG may include both guard subband resource and the uplink subband resource, with some PRBs configured as guard subbands and the remaining configured as uplink subbands. Alternatively, RBGs may include both protected and downlink subband resources, with some PRBs configured as guard subbands and the remaining configured as downlink subbands. If this RBG is not used during PDSCH scheduling, it may result in resource waste, as shown in PRB36-39 and PRB104-107 in Fig. 2, which may result in partial resource waste.

In order to avoid resource waste, after the UE determines the guard subband resource from the BWP, if the subband resource group is a frequency domain resource group that includes an uplink subband resource and a guard subband resource, the UE can send uplink data on the uplink subband resource of the subband resource group, or the UE prohibits sending uplink data on the uplink subband resource of the subband resource group. Alternatively, if the subband resource group is a subband resource group that includes a downlink subband resource and a guard subband resource, the UE can receive downlink data on the downlink subband resource of the subband resource group, or the UE prohibits receiving downlink data on the downlink subband resource of the subband resource group.

For example, if the base station and UE reach the following agreement: if the base station uses frequency domain resource allocation type 0 (FDRA0) when scheduling UE, the RBG occupied by the guard subband resource can still be indicated to use, but the RBG size becomes the RBG size minus the guard subband resource size. That is, for UE, when invoking PDSCH, the RBG occupied by the guard subband resource is still indicated as 1, but both the base station and the UE believe that only some PRBs that are not occupied by the guard subband resource are used in the RBG. Correspondingly, when calculating the PDSCH Transport Block Size (TBS), the PRB occupied by guard subband resource is removed from the RBG.

If the base station uses frequency domain resource allocation type 1 (FDRA1) when scheduling UE, the RBG occupied by guard subband resources is not used, and the base station does not use the PRB occupied by guard subband resources when scheduling PDSCH.

Secondly, configuration of frequency domain resource for the first-type subband.

The base station can send a subband resource indication message to the UE, the subband resource indication message includes the frequency domain resource information of the first-type subband. In this way, the UE can determine the frequency domain resource of the first-type subband from the BWP based on the frequency domain resource information of the first-type subband. Here, the first-type subband can be an uplink subband or a downlink subband, and the frequency domain resources of the first-type subband can be either uplink subband resource or downlink subband resource.

In an example, the frequency domain resources of the first-type subband can be configured as follows.

Method 1: Subband configuration based on Bitmap.

When explicitly configuring the first-type subband and the guard subband, the first-type subband is configured using Bitmap, which is called the Bitmap scheme. In order to save the number of bits, the frequency domain resource unit indicator can be used to determine the frequency domain resource granularity of the subband. The frequency domain resource granularity of the subband is also known as the Subband Resource Group (SBG), and the granularity of the SBG can be equal to the RBG. After determining the SBG, the number of bits occupied by the subband resource allocation indicator (Bitmap) is determined based on the size of the BWP, i.e. $N = \text{ceil}(N_{BWP}^{size}/\text{SBG})$, $N_{BWP}^{size}$ represents the size of BWP, which is the number of PRBs. If $N_{BWP}^{size}$ cannot be evenly divided by SBG, so the frequency domain resource indicated by the last bit will be smaller than SBG, with a size of $N_{BWP}^{size} mod(SBG)$.

Then, Bitmap is used to determine the resources occupied by the first-type subband. "1" in Bitmap is used to indicate that the corresponding frequency domain resources in the SBG are allocated t0o the frequency domain resource of the first-type subband, and "0" in Bitmap is used to indicate that the corresponding frequency domain resource in the SBG is not allocated to the frequency domain resource of the first-type subband.

As shown in Fig. 2, taking the first-type subband as an example, the uplink subband is located in the middle position of the BWP, with SBG equal to 8. The size of the guard subband is 4 PRBs, and there are two guard subbands located between the uplink subband and the downlink subband on both sides. The subband resource allocation indicates that Bitmap is configured as 00000 111111110000.

In summary, the frequency domain resource information of the first-type subband can include the Bitmap configuration of the subband resource group occupied by the first-type subband. If the Bitmap configuration represents the first value corresponding to the subband resource group (such as 1), then the subband resource group is occupied by the first-type subband; If the Bitmap configuration indicates that the subband resource group corresponds to the second value (such as 0), then the subband resource group is not occupied by the first-type subband. In this case, UE determines the frequency domain resource occupied by the first-type subband based on the Bitmap configuration of the subband resource group occupied by the first-type subband.

In an example, when implicitly configuring the guard subband resource, that is, explicitly configuring the uplink and downlink subband resources, and deriving the guard subband resources based on the uplink and downlink subband resources, Bitmaps need to be configured for the uplink and downlink subband resources respectively. If Bitmap is used to indicate uplink and downlink subband resources, the size of the guard subband resource is an integer multiple of RBG.

Method 2: Subband configuration based on subband resource indication value.

When explicitly configuring the first-type subband, the first-type subband is determined by the Subband Resource Indication Value (SBRIV) composed of a starting position and a length, which is called the SBRIV scheme. Here, SBRIV can be determined by the starting PRB position $RB_{Start}$ of the first-type subband and the number $L_{RB}$ of consecutive PRBs occupied by the first-type subband. The starting PRB position $RB_{Start}$ of the first-type subband is also recorded as $PRB_{Start}$, the number $L_{RB}$ of consecutive PRBs occupied by the first-type subband is also marked as $L_{PRB}$.

In summary, the frequency domain resource information of the first-type subband can include the corresponding subband resource indication value SBRIV (for convenience of differentiation, it can be recorded as the first subband resource indication value). The first subband resource indication value is determined by the position of the starting physical resource block $PRB_{Start}$ of the first-type subband and the number $L_{PRB}$ of consecutive physical resource blocks occupied by the first-type subband. In this case, the UE can derive the position of the starting physical resource block $PRB_{Start}$ of the first-type subband and the number $L_{PRB}$ of consecutive physical resource blocks occupied by the first-type subband based on the first subband resource indication value SBRIV, then determine the frequency domain resource occupied by the first-type subband based on the position of the starting physical resource block of the first-type subband and the number of consecutive physical resource blocks occupied by the first-type subband.

The process of obtaining the first subband resource indication value can include: if $(L_{PRB} - 1) \leq \left\lfloor N_{BWP}^{size}/2 \right\rfloor$, the first subband resource indication value can be determined as follows: $SBRIV = N_{BWP}^{size} * (L_{PRB} - 1) + PRB_{Start}$. Otherwise, the first subband resource indication value can be determined as follows: $SBRIV = N_{BWP}^{size} * (N_{BWP}^{size} - L_{PRB} + 1) + (N_{BWP}^{size} - 1 - PRB_{Start})$.

Here, $N_{BWP}^{size}$ represents the total number of physical resource blocks in the BWP where the first-type subband is located, that is, the number of PRBs in the BWP where the first-type subband is located, $L_{PRB} \geq 1$ and cannot exceed $N_{BWP}^{size} - RB_{Start}$.

In one example, taking the first-type subband being an uplink subband as an example, when explicitly configuring the guard subband resource, the guard subband resource is adjacent to the uplink subband resource (known from the SBRIV). In the entire BWP, except for the uplink and guard subband resources, the remaining resources are the downlink subband resource.

In an example, if the subband resource indication message is configured semi statically, the subband resource indication message can be an RRC message, and a new parameter can be introduced in the RRC message to indicate the uplink subband resource. For example, the new parameter can be ulSubband, and the bit size thereof is

$$\left\lceil log2(N_{BWP}^{size} * \quad (N_{BWP}^{size} + 1)/2)\right\rceil$$ . If there are at most several uplink subband resources in the BWP, several of the above parameters need to be configured.

As shown in Fig. 2, if the size of the guard subband resource is 4, there is only one uplink subband resource, and the length of the uplink subband resource is 64PRB with a starting position of 40, then the RRC message can be seen in Table 3.

Table 3

| guardBandSizeInSbfd | 4 |
|---|---|
| ulSubband | 133* (64-1) +40=8419 |

In an example, if the subband resource indication message is dynamically configured, then the subband resource indication message can be a DCI message. An example of a DCI message can be seen in Table 4.

Table 4

| sbfdGuardBandIndicator | 3, which represents a value with an index 3 in sbfdGuardBandList, that is, the size of GB is 4. |
|---|---|
| ulSubband | 8419 |

In an example, when implicitly configuring the guard subband resources, that is, explicitly configuring uplink and downlink subband resources, in addition to introducing ulSubband, additional configuration parameters for downlink subband resources need to be introduced, such as dlSubband, which requires several parameters for several downlink subband resources.

Method 3: Subband configuration based on subband resource indication value and subband resource groups.

When explicitly configuring the first-type subband, SBG can be used as the unit for configuration, and SBRIV is determined by the starting SBG position SBG$_{start}$ of the first-type subband and the number L$_{SBG}$ of consecutive SBGs occupied by the first-type subband, which is called a SBRIV+SBG scheme. The first-type subband is determined by the Subband Resource Indication Value (SBRIV) composed of the starting SBG position and the number of SBGs.

In summary, the frequency domain resource information of the first-type subband can include the subband resource indication value SBRIV corresponding to the first-type subband (for convenience in distinguishing, it can be recorded as the second subband resource indication value), and the second subband resource indication value is determined by the position of the starting subband resource group SBG$_{start}$ of the first-type subband and the number L$_{SBG}$ of consecutive subband resource groups occupied by the first-type subband. In this case, the UE can derive the position of the starting subband resource group SBG$_{start}$ of the first-type subband and the number L$_{SBG}$ of consecutive subband resource groups occupied by the first-type subband based on the second subband resource indication value SBRIV, then determine the frequency domain resources occupied by the first-type subband based on the location of the initial subband resource group and the number of consecutive subband resource groups occupied by the first-type subband.

The process of obtaining the second subband resource indication value can include: if $(L_{SBG} - 1) \leq \lfloor N_{SBG}/2 \rfloor$, then the second subband resource indication value is determined as follows: *SBRIV* $= N_{SBG} * (L_{SBG} - 1) + SBG_{start}$. Otherwise, the second subband resource indication value is determined as follows: *SBRIV* $= N_{SBG} * (N_{SBG} - L_{SBG} + 1) + (N_{SBG} - 1 - SBG_{start})$. $N_{SBG} = \left\lceil \left(N_{BWP}^{size} + (N_{BWP}^{start} mod SBG)\right)/SBG \right\rceil$, represents the total number of subband resource groups in the BWP where the first-type subband is located, that is, the total number of SBGs in the BWP where the SBG is located, where $N_{BWP}^{start}$ represents the starting position of BWP, L$_{SBG}$ ≥ 1 and cannot exceed $N_{SBG}$ - SBG$_{start}$.

In one example, taking the first-type subband being an uplink subband as an example, when explicitly configuring the guard subband resource, the guard subband resource is adjacent to the uplink subband resource (known from the SBRIV). In the entire BWP, except for the uplink and guard subband resources, the remaining resources is the downlink subband resource.

In an example, if the subband resource indication message is configured semi statically, then the subband resource indication message can be an RRC message. By introducing new parameters in the RRC message to indicate the uplink subband resource, such as ulSubband, the bit size of ulSubband parameters can be as small as $\lceil log2(N_{SBG} * (N_{SBG} + 1)/2) \rceil$ , and the maximum number of uplink subband resources in BWP, several of the above parameters need to be configured.

As shown in Fig. 2, $N_{BWP}^{size} = 133$, $N_{BWP}^{start} = 0$ , SBG unit can be 8, then $N_{SBG} = \left\lceil \left( N_{BWP}^{size} + (N_{BWP}^{start} \bmod SBG) \right) / SBG \right\rceil = \lceil 133/8 \rceil = 17$ , SBG$_{Start}$ =5, L$_{SBG}$ =8, in this case, an example of an RRC message can be seen in Table 5.

Table 5

| guardBandSizeInSbfd | 4 |
|---|---|
| ulSubband | 17* (8-1) +5=124 |

In an example, if the subband resource indication message is dynamically configured, then the subband resource indication message can be a DCI message. An example of a DCI message can be seen in Table 6.

Table 6

| sbfdGuardBandIndicator | 3, which represents a value with an index 3 in sbfdGuardBandList, that is, the size of GB is 4. |
|---|---|
| ulSubband | 124 |

From the parameter sizes of methods 2 and 3, it can be seen that when using the SBRIV+SBG scheme, the required signaling overhead is much lower than that of using the SBRIV scheme, thus saving signaling overhead.

In an example, when implicitly configuring the guard subband resource, that is, explicitly configuring uplink and downlink subband resources, in addition to introducing ulSubband, additional configuration parameters for downlink subband resource need to be introduced, such as dlSubband, which requires several parameters for several downlink subband resources.

In an example, regarding which method to configure the frequency domain resource of the first-type subband, the base station can inform the UE in advance, so that the UE can determine the frequency domain resource of the first-type subband based on the correct resource allocation method, and then determine the frequency domain resource of the guard subband and the second-type subband. For example, before the base station sends a subband resource indication message to the UE, the base station can also send a subband configuration type indication message to the UE. The subband configuration type indication message can be an RRC message or other types of messages.

If the subband configuration type indication message is used to indicate the Bitmap type, it indicates that the subband resource indication message carries the Bitmap configuration of the subband resource group occupied by the first-type subband. The UE determines the frequency domain resource occupied by the first-type subband based on the Bitmap configuration, that is, using Method 1 to determine the frequency domain resource occupied by the first-type subband.

Alternatively, if the subband configuration type indication message is used to indicate the SBRIV type, it indicates that the subband resource indication message carries the first subband resource indication value corresponding to the first-type subband. The UE can resolve the first subband resource indication value SBRIV and determine the frequency domain resources occupied by the first-type subband based on the first subband resource indication value SBRIV, that is, using Method 2 to determine the frequency domain resource occupied by the first-type subband.

Alternatively, if the subband configuration type indication message is used to indicate the SBRIV and SBG types, it indicates that the subband resource indication message carries the second subband resource indication value corresponding to the first-type subband. The UE can resolve the second subband resource indication value SBRIV and determine the frequency domain resource occupied by the first-type subband based on the second subband resource indication value SBRIV, that is, using Method 3 to determine the frequency domain resource occupied by the first-type subband.

An example of a subband configuration type indication message (RRC message) can be: sbfdFdraType Enumerate {Type0, Type1, Type2} OPTIONAL. Type0 represents the Bitmap type, Type1 represents the SBRIV type, and Type2 represents the SBRIV and SBG types. For example, the parameter sbfdFdraType Enumerate is configured when SBFD is enabled and not configured when SBFD is not enabled.

Thirdly, the configuration of SBFD symbols. Here, SBFD subband resource can be frequency domain resource configured on SBFD symbols. In order to configure SBFD subband resource, it is necessary to configure SBFD symbols. For example, the first-type subband is the frequency domain resource configured on the SBFD symbols, and the second-type subband is the frequency domain resource configured on the SBFD symbols.

The frame structure of TDD is divided into UL slots, DL slots, and F slots using slots as units. The symbols in F slots can be configured as UL symbols, DL symbols, and flexible (F: Flexible) symbols, while F symbols can be used for UL, DL, or GP. Regarding the frame structure of TDD, the base station can inform the UE through the semi static configuration mode TDD-UL-DL-ConfigCommon/TDD-UL-DL-ConfigDedicated.

In TDD-UL-DL-ConfigCommon, at most two frame structure patterns can be configured. Each pattern can configure the periodicity of the frame structure, and the specific configuration of each slot and symbol in the period (such as DL, UL, or F). These two patterns together determine the current overall frame structure.

A frame structure configured through semi static configuration in TDD can be seen in Fig. 3. The uplink/downlink ratio is 1:4, the F slot is slot 3, and symbols # 10 and # 11 are configured as F symbols for GP switching between uplink and downlink.

In TDD-UL-DL-ConfigDedicated, the symbol configured as F in TDD-UL-DL-ConfigCommon can be changed, and the F symbol can be further configured as DL or UL.

In addition, the frame structure of TDD can also be dynamically indicated through DCI, allowing a Slot Format Indicator (SFI) to be sent in DCI format 2_0 to change the F symbol and further configure it as DL or UL symbols, but it is not allowed to change the semi static configuration of DL and UL symbols.

In the above method, the semi static configuration scheme of the frame structure cannot configure SBFD symbols because the positions of SBFD symbols are not explicitly specified. On the other hand, dynamically indicating through DCI cannot change DL and UL symbols, which is not conducive to flexibly adjusting the position of SBFD symbols.

In view of the above findings, this embodiment provides a configuration method for SBFD symbols, including a semi static configuration method for SBFD symbols and a dynamic configuration method for SBFD symbols. The description will be given as follows.

Scenario 1: Semi static configuration method for SBFD symbols.

The base station can send a frame structure configuration message to the UE, and the UE receives the frame structure configuration message. The frame structure configuration message can be a semi static frame structure configuration message, and the frame structure configuration message includes a starting symbol of the SBFD symbols and a length of the SBFD symbols. UE can determine all of the SBFD symbols used to configure SBFD subband resources (such as uplink and downlink subband resources) based on the starting symbol of SBFD symbols and the length of SBFD symbols.

For example, the SBFD symbols (time domain resource) can be indicated by a semi static frame structure configuration message, which can be an RRC message, such as TDD-UL-DL-ConfigCommon (public configuration) or TDD-UL-DL-ConfigDedicated (private configuration). For example, the SBFD frame structure is DXXXU, where X represents a slot containing SBFD symbols, with one or more SBFD symbols therein.

In one example, the SBFD symbols can be configured semi statically through the starting symbol of the SBFD symbols and the length of the SBFD symbols. Here, the starting symbol of the SBFD symbols represents the first symbol of the SBFD symbols in the frame structure pattern (such as a symbol index value calculated from the beginning of the first symbol), and the length of the SBFD symbols represents a number of consecutive symbols, including the starting symbol, counted forward from the starting symbol. Alternatively, the starting symbol of the SBFD symbols represents the last symbol of the SBFD symbols in the frame structure pattern (such as a symbol index value calculated from the beginning of the last symbol), and the length of the SBFD symbols represents a number of consecutive symbols, including the starting symbol, counted backward from the starting symbol.

Considering flexibility, two SBFD related patterns can be configured within a frame structure periodicity. Two SBFD patterns are optional, only enabled in SBFD mode, and correspond one-to-one to the current frame structure pattern. Each pattern contains configuration information for two sets of SBFD symbols, each set including a starting symbol and a length. Both sets of SBFD configuration information are optional.

The value of the starting symbol of the first set of configuration information represents the first symbol of the SBFD, which is calculated backwards from the first symbol in the current frame structure pattern. The length represents the length of the symbols sequentially in the SBFD.

The value of the starting symbol of the second set of configuration information represents the first symbol of the SBFD, which is calculated forward from the last symbol in the current frame structure pattern. The length represents the length of the symbols sequentially in the SBFD.

If the length of each set of SBFD starting from its starting symbol exceeds the range of the frame structure pattern periodicity, the exceeding part is invalid. There is no limit on whether the two sets of SBFD symbols overlap, and the actual configuration is determined by the base station.

In one example, the RRC message for SBFD symbol configuration is as follows:

TDD-UL-DL-ConfigCommon ::= SEQUENCE {

referenceSubcarrierSpacing SubcarrierSpacing,

pattern1 TDD-UL-DL-Pattern,

SBFDPattern1    TDD-UL-DL-Pattern-SBFD      optional,

pattern2 TDD-UL-DL-Pattern,

SBFDPattern2    TDD-UL-DL-Pattern-SBFD      optional,

}

TDD-UL-DL-Pattern-SBFD::= SEQUENCE {

startSymbolOfSbfd1 INTEGER (0..maxNrofSlots* maxNrofSymbols), optional

nrofSbfdSymbols1 INTEGER (0..maxNrofSlots* maxNrofSymbols), optional

startSymbolOfSbfd2 INTEGER (0..maxNrofSlots* maxNrofSymbols), optional

nrofSbfdSymbols2 INTEGER (0..maxNrofSlots* maxNrofSymbols), optional

}

Scenario 2: Dynamic configuration method for SBFD symbols.

The base station can send an RRC message to the UE, and the UE receives the RRC message. The RRC message can include a plurality of slot format combinations, each of the slot format combinations includes a slot format type used to indicate the SBFD symbols. The base station sends a DCI message to the UE, and the UE receives the DCI message. The DCI message can include an index of a target slot format combination. After receiving DCI message, the UE can select the corresponding target slot format combination from the plurality of slot format combinations based on the index of the target slot format combination; Based on the target slot format combination, the UE determines all of the SBFD symbols used to configure SBFD subband resources (such as uplink and downlink subband resources).

For example, the SBFD symbols can be dynamically configured using slot format indication. Based on the fact that there are only D, U, and F symbols in the slot structure, in order to better support SBFD, a new slot format type is introduced when SBFD is enabled, and the new slot format type is marked as an X symbol. The X symbol represents the SBFD symbol, which means that there are four symbol types in SBFD mode, D, U, F, and X symbols. This allows the slot format type of SBFD symbols to be indicated based on slot format indication.

For example, the frame structure of TDD is achieved through semi static configuration and dynamic indication, and a plurality of slot format combinations (SFCs) are defined through SFI in high-level signaling. For example, the base station selects slot formats that meet business requirements and adds these slot formats to the SFCs. Some slot formats are shown in Table 7. D represents DL symbol, U represents UL symbol, and F represents Flexible symbol. For each SFC, it is identified by a fixed ID and contains one or more slot format types. After completing the SFI configurations, the base station sends a plurality of slot format combinations to the UE in the RRC message.

Table 7

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |

(continued)

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| ... | ... | | | | | | | | | | | | | |
| 55 | D | D | F | F | F | U | U | U | D | D | D | D | D | D |
| 56-254 | Reserved | | | | | | | | | | | | | |
| 255 | User equipment determines slot format based on tdd-UL-DL-ConfigurationCommon, tdd-UL-DL-ConfigurationDedicated, and DCI format | | | | | | | | | | | | | |

Then, after configuring a plurality of slot format combinations through an RRC message, the base station performs periodic PDCCH (Physical Downlink Control Channel) in DCI format 2_0, informs the UE of the index of the SFC to be used. Partial information structure of the DCI format 2_0 is as follows:

- If the higher layer parameter slotFormatCombToAddModList is configured,
- Slot format indicator 1, Slot format indicator 2, ..., Slot format indicator N

By configuring the slot structure through SFI, only the F symbols in the slot structure can be changed.

In the SBFD system, SFCs for multiple SBFDs are also configured in a semi static manner, and then specific SBFD SFCs are indicated by the SFI in the DCI. However, in the dynamic configuration of SBFD symbols, any symbol can be changed through SFI, changing D/U/F to X, or changing F/X to D or U. In order to distinguish it from the slot formats in Table 7, a new slot format has been specifically introduced for SBFD. The F symbols in all slot formats (# 2- # 55) in slot format index # 0- # 55 have been changed to X, and a new slot format type has been defined starting from # 56, as shown in Table 8.

Table 8

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 | X | X | X | X | X | X | X | X | X | X | X | X | X | X |
| ... | ... | | | | | | | | | | | | | |
| 109 | D | D | X | X | X | U | U | U | D | D | D | D | D | D |
| 110 - 254 | Reserved | | | | | | | | | | | | | |
| 255 | User equipment determines slot format based on tdd-UL-DL-ConfigurationCommon, tdd-UL-DL-ConfigurationDedicate, and DCI format | | | | | | | | | | | | | |

When a position of a SBFD symbol in a slot is determined, an appropriate slot format index can be simply selected from Table 8. When adding the slot format index to the SFC of SBFD, the X symbol represents the SBFD symbol. For example, an example of an RRC message of SFC can be as follows:

SlotFormatCombinationsPerCell ::= SEQUENCE {

…

slotFormatCombinations SEQUENCE (SIZE (1..maxNrofSlotFormatCombinationsPerSet)) OF SlotFormatCombination OPTIONAL,

slotFormatCombinations-SBFD SEQUENCE (SIZE (1..maxNrofSlotFormatCombinationsPerSet)) OF SlotFormatCombination-SBFD OPTIONAL,

…,

}

where SlotFormatCombination-SBFD denotes a SBFD time slot format combination field, which can carry a combination identifier corresponding to the SBFD time slot format combination and a time slot format index of the time slot format, SlotFormatCombination-SBFD filed can be configured with at most maxNrofSlotFormatCombinationsPerSet elements, each of the elements is defined as follows:

```
SlotFormatCombination-SBFD ::= SEQUENCE {
slotFormatCombinationId-SBFD SlotFormatCombinationId,
slotFormats-SBFD SEQUENCE (SIZE (1..maxNrofSlotFormatsPerCombination))
OF INTEGER (0..255)
}
```

where slotFormatCombinationId-SBFD denotes an identifier, with values starting from 0 and sequentially taken to maxNrofSlotFormatCombinationsPerSet-1, which can be 0, 1, 2,..., maxNrofSlotFormatCombinationsPerSet-1, and so on. SlotFormats SBFDx denotes a unique slot format index for a slot format, can be configured with at most a maxNrofSlotFormatsPerCombinations. The slot format index values are selected from Table 8, and each index value range can be from 0 to 255. If slotFormatCombinationId-SBFD is configured, slotFormatCombinations will be ignored, which means that the slot structure configuration in SBFD mode will overwrite the slot structure configuration in non SBFD mode. On the contrary, if slotFormatCombinations-SBFD is not configured, then the frame structure depends on the configuration of slotFormatCombinations, which operates in the traditional TDD mode.

When indicating the SFI of SBFD through DCI, DCI format 2_0 can still be used, but introducing new SFI for SBFD. The configuration in DCI Format 2_0 be seen as follows: SBFD Slot format indicator 1, SBFD Slot format indicator 2, ..., SBFD Slot format indicator N corresponding to slotFormatCombinationId-SBFD in SlotFormatCombination-SBFD, respectively.

- If the higher layer parameter slotFormatCombToAddModList is configured,
- If the higher layer parameter slotFormatCombinations SBFD is configured
- SBFD Slot format indicator 1, SBFD Slot format indicator 2,..., SBFD Slot format indicator N,
- else
- Slot format indicator 1, Slot format indicator 2,..., Slot format indicator N

When D/U/F is configured as X, activated and effective subband resource configuration can be used. That is, the configuration of uplink, downlink, and guard subband resources in the newly configured X symbol is the same as that in other X symbols. When changing from X to D or U, the X symbol becomes a full D or full U symbol.

From the above technical solution, it can be seen that the UE determines the starting position or the ending position of the guard subband based on the subband resource indication message. The UE determines the length of the guard subband based on the configuration message of the guard subband, determines the guard subband resource from the BWP, and distinguishes the uplink subband resource, downlink subband resource, and guard subband resource in the BWP. The UE utilizes SBFD subband resources for data transmission to improve resource utilization, increase network coverage and capacity, and reduce transmission latency.

By configuring fixed guard bandwidth, only uplink or downlink subband resources need to be configured to complete the frequency domain resource configuration of SBFD, thereby reducing the air interface signaling overhead. By providing different subband frequency domain resource configuration schemes, flexible subband frequency domain resource configuration can be achieved. Different schemes have different air interface signaling costs and can be flexibly selected. The SBFD symbol can be flexibly configured by changing the D/U/F symbol to an X symbol, or changing the X/F symbol to a D/U symbol, and flexibly changing the SBFD symbol according to different scene requirements.

In order to better support the SBFD communication system and be compatible with the TDD system, the frequency domain resources of the subband are configured for SBFD communication. Here, for the subband frequency domain resources of SBFD, the DL or UL subbands are configured and the guard bandwidth size is used to configure the subband frequency domain resources of SBFD, and different subband configuration strategies are provided to complete the subband frequency domain resource configuration of SBFD, reducing the air interface signaling overhead, and enabling more air interface resources to be used for data transmission. On the basis of configured subband frequency domain resources, BWP can be dynamically configured and flexibly adjusted to serve different business scenarios.

Based on the same idea, an apparatus for determining subband resources corresponding to the method for determining subband resources, and a base station and a UE, are also provided. Since the principle of solving the problem between the base station and the UE is similar to the method for determining subband resources, for the implementations of the base station and the UE, reference can be made to the method for determining subband resources, which will not be repeated.

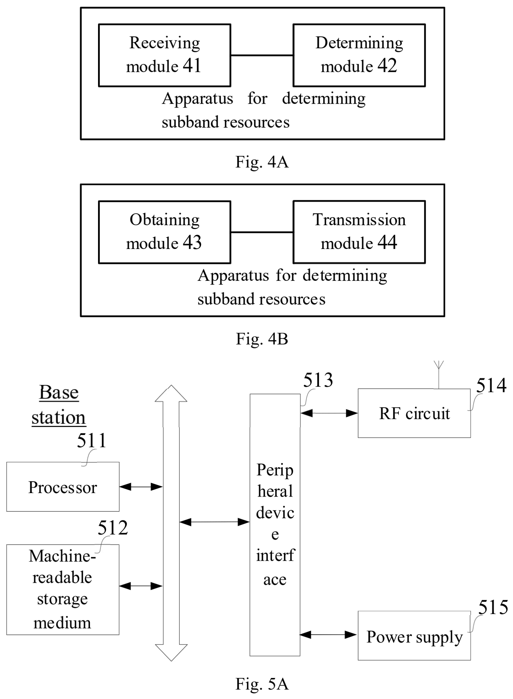

Based on the same application concept as the above method, this application provides an example of an apparatus for determining subband resources applied to a user equipment, as shown in Fig. 4A, the apparatus includes:

a receiving module 41 configured to receive a subband resource indication message from a base station, wherein the subband resource indication message includes frequency domain resource information of a first-type subband;

a determining module 42 configured to determine a starting position and/or an ending position of the first-type subband based on based on the frequency domain resource information of the first-type subband indicated in the frequency domain resource information of the first-type subband, and to determine a starting position or an ending position of a guard subband based on the starting position and/or the ending position of the first-type subband;

the receiving module 41 also configured to receive a configuration message of the guard subband from the base station, wherein the configuration message of the guard subband includes a length of the guard subband;

the determining module 42 also configured to determine the guard subband resource from a BWP using the starting position of the guard subband and the length of the guard subband, or to determine a guard subband resource from the BWP based on the ending position of the guard subband and the length of the guard subband.

In one example, the receiving module 41, when receiving a configuration message of the guard subband from the base station, is specifically configured to: receive a semi static configuration message from the base station, the semi static configuration message including a length of the guard subband; or, receive a semi static configuration message from the base station, wherein the semi static configuration message includes a list of subband lengths, and the list of subband lengths includes lengths of a plurality of guard subbands; receive a dynamic configuration message from the base station, and the dynamic configuration message includes index information used to indicate to select a length of a guard subband corresponding to the index information from the list of subband lengths.

In one example, the determining module 42, when determining the starting and/or the ending position of the guard subband based on the starting position and/or the ending position of the first-type subband, is specifically configured to: if the first-type subband is located on an upper boundary of the BWP, determine the ending position of the guard subband based on the starting position of the first-type subband; or,

if the first-type subband is located at a lower boundary of the BWP, determine the starting position of the guard subband based on the ending position of the first-type subband; or,

if the first-type subband is located in the middle position of the BWP, determine the starting position of the guard subband on the upper side of the first-type subband based on the ending position of the first-type subband, and determine the ending position of the guard subband on the lower side of the first-type subband based on the starting position of the first-type subband.

In one example, the frequency domain resource information of the first-type subband includes a Bitmap configuration of a subband resource group occupied by the first-type subband; Here, if the Bitmap configuration indicates that a subband resource group corresponds to a first value, the subband resource group is occupied by the first-type subband; if the Bitmap configuration indicates that a subband resource group corresponds to a second value, the subband resource group is not occupied by the first-type subband; or,

the frequency domain resource information of the first-type subband includes a first subband resource indication value corresponding to the first-type subband; wherein the first subband resource indication value is determined by a position of a starting physical resource block of the first-type subband and a number of consecutive physical resource blocks occupied by the first-type subband; or,

the frequency domain resource information of the first-type subband includes a second subband resource indication value corresponding to the first-type subband; wherein the second subband resource indication value is determined by a position of a starting subband resource group of the first-type subband and a number of consecutive subband resource groups occupied by the first-type subband.

In one example, the process of obtaining the first subband resource indication value includes:

if $(L_{PRB} - 1) \leq \lfloor N_{BWP}^{size}/2 \rfloor$, determining the first subband resource indication value as follows:

$SBRIV = N_{BWP}^{size} * (L_{PRB} - 1) + PRB_{Start}$; Otherwise, determining the first subband resource indication value as follows: $SBRIV = N_{BWP}^{size} * (N_{BWP}^{size} - L_{PRB} + 1) + (N_{BWP}^{size} - 1 - PRB_{Start})$;

where $L_{PRB}$ represents a number of consecutive physical resource blocks occupied by the first-type subband, $N_{BWP}^{size}$ represents a total number of physical resource blocks in the BWP where the first-type subband is located, $SBRIV$ represents the first subband resource indication value, $PRB_{Start}$ represents the position of the starting physical resource block of the first-type subband.

In one example, the process of obtaining the second subband resource indication value includes:

if $(L_{SBG} - 1) \leq \lfloor N_{SBG}/2 \rfloor$, determining the second subband resource indication value as follows: $SBRIV = N_{SBG} * (L_{SBG} - 1) + SBG_{start}$; otherwise, determining the second subband resource indication value as follows: $SBRIV = N_{SBG} * (N_{SBG} - L_{SBG} + 1) + (N_{SBG} - 1 - SBG_{start})$;
where $L_{SBG}$ represents a number of consecutive subband resource groups occupied by the first-type subband, $N_{SBG}$ represents a total number of subband resource groups in the BWP where the first-type subband is located, $SBRIV$ represents the second subband resource indication value, $SBG_{start}$ represents the position of the starting subband resource group of the first-type subband.

In one example, the receiving module 41 is also configured to receive a subband configuration type indication message from the base station; if the subband configuration type indication message is used to indicate a Bitmap type, determine that the subband resource indication message carries a Bitmap configuration of the subband resource group occupied by the first-type subband; or,

if the subband configuration type indication message is used to indicate a SBRIV type, determine that the subband resource indication message carries a first subband resource indication value corresponding to the first-type subband; or,
if the subband configuration type indication message is used to indicate a SBRIV and SBG type, determine that the subband resource indication message carries a second subband resource indication value corresponding to the first-type subband.

In one example, the first-type subband is an uplink subband, or the first-type subband is a downlink subband. The determining module 42 is also configured to: if the frequency domain resource of the first-type subband is an uplink subband resource, based on the uplink subband resource and the guard subband resource, determine a downlink subband resource from the BWP; or, if the frequency domain resource of the first-type subband is a downlink subband resource, determine an uplink subband resource from the BWP based on the downlink subband resource and the guard subband resource.

In one example, the BWP includes a plurality of subband resource groups; the apparatus further includes:

a transmission module configured to transmit uplink data on the uplink subband resource of the subband resource group, or prohibit transmission of uplink data on the uplink subband resource of the subband resource group, if the subband resource group is a frequency domain resource group that includes an uplink subband resource and a guard subband resource;
the transmission module is also configured to receive downlink data on the downlink subband resource of the subband resource group, or to prohibit the reception of downlink data on the downlink subband resource of the subband resource group, if the subband resource group is a subband resource group that includes a downlink subband resource and a guard subband resource.

In one example, the first-type subband is a frequency domain resource configured on SBFD symbols;

the receiving module 41 is also configured to receive a frame structure configuration message from the base station, and the frame structure configuration message includes a starting symbol of the SBFD symbols and a length of the SBFD symbols; wherein the frame structure configuration message is a semi static frame structure configuration message;
the determining module 42 is also configured to determine all of the SBFD symbols for configuring the first-type subband based on the starting symbol of the SBFD symbols and the length of the SBFD symbols.

In one example, the starting symbol of the SBFD symbols represents a first symbol of the SBFD symbols in the frame structure, and the length of the SBFD symbols represents a number of consecutive symbols, including the starting symbol, counted forward from the starting symbol; or, the starting symbol of the SBFD symbols represents a last symbol of the SBFD symbols in the frame structure, and the length of the SBFD symbols represents a number of consecutive symbols, including the starting symbol, counted backward from the starting symbol.

If the frame structure configuration message is a semi static frame structure configuration message, the frame structure configuration message is TDD-UL-DL-ConfigCommon or TDD-UL-DL-ConfigDedicated in an RRC message.

In one example, the first-type subband is a frequency domain resource configured on SBFD symbols; the receiving module 41 is also configured to receive an RRC message from the base station, the RRC message including a plurality of slot format combinations, and each of the slot format combinations including a slot format type for indicating the SBFD symbols; receive a DCI message from the base station, the DCI message including an index of a target slot format combination. The determining module 42 is also configured to select a corresponding target slot format combination from the plurality of slot format combinations based on the index of the target slot format combination; and determine all of the SBFD symbols used to configure the first-type subband based on the target slot format combination.

Based on the same idea as the above method, an example of this application provides an apparatus for determining subband resources applied to a base station, as shown in Fig. 4B. The apparatus can include:

an obtaining module 43 configured to obtain frequency domain resource information of a first-type subband;
a transmission module 44 configured to send a subband resource indication message to a user equipment, the subband resource indication message including the frequency domain resource information of the first-type subband; wherein the subband resource indication message is used to indicate the user equipment to determine a starting position and/or an ending position of the first-type subband according to the frequency domain resource of the first-type subband indicated in the frequency domain resource information of the first-type subband, and to determine a starting position or an ending position of a guard subband based on the starting position and/or the ending position of the first-type subband;
the obtaining module 43 also configured to obtain a length of the guard subband;
the transmission module 44 also configured to send a configuration message of a guard subband to the user equipment, the configuration message of the guard subband including a length of the guard subband; wherein the configuration message is used to indicate that the user equipment to determine the guard subband resource from a BWP using the starting position of the guard subband and the length of the guard subband, or to determine the guard subband resource from the BWP based on the ending position of the guard subband and the length of the guard subband.

In one example, the transmission module 44, when sending a configuration message of a guard subband to the user equipment, is specifically configured to: send a semi static configuration message to the user equipment, the semi static configuration message including the length of the guard subband; or, send a semi static configuration message to the user equipment, wherein the semi static configuration message includes a list of subband lengths, and the list of subband lengths includes lengths of a plurality of guard subbands; send a dynamic configuration message to the user equipment, the dynamic configuration message including index information used to indicate to select a length of a guard subband corresponding to the index information from the list of subband lengths.

In one example, the frequency domain resource information of the first-type subband includes a Bitmap configuration of a subband resource group occupied by the first-type subband; if the Bitmap configuration indicates that a subband resource group corresponds to a first value, the subband resource group is occupied by the first-type subband; if the Bitmap configuration indicates that a subband resource group corresponds to a second value, the subband resource group is not occupied by the first-type subband; or,

the frequency domain resource information of the first-type subband includes a first subband resource indication value corresponding to the first-type subband; wherein the first subband resource indication value is determined by a position of a starting physical resource block of the first-type subband and a number of consecutive physical resource blocks occupied by the first-type subband; or,

the frequency domain resource information of the first-type subband includes a second subband resource indication value corresponding to the first-type subband; wherein the second subband resource indication value is determined by a position of a starting subband resource group of the first-type subband and a number of consecutive subband resource groups occupied by the first-type subband.

In one example, the process of obtaining the first subband resource indication value includes:

if $\quad (L_{PRB} - 1) \leq \left\lfloor N_{BWP}^{size}/2 \right\rfloor$, determining the first subband resource indication value as follows:

$$SBRIV = N_{BWP}^{size} * (L_{PRB} - 1) + PRB_{Start}$$ ; otherwise, determining the first subband resource indication

value as follows: $\quad SBRIV = N_{BWP}^{size} * \left( N_{BWP}^{size} - L_{PRB} + 1 \right) + \ \left( N_{BWP}^{size} - 1 - PRB_{Start} \right)$ ;

where $L_{PRB}$ represents a number of consecutive physical resource blocks occupied by the first-type subband,

$N_{BWP}^{size}$ represents a total number of physical resource blocks in the BWP where the first-type subband is located, $SBRIV$ represents a first subband resource indication value, $PRB_{start}$ represents the position of the starting physical resource block of the first-type subband.

In one example, the process of obtaining the second subband resource indication value includes:

if $(L_{SBG} - 1) \leq \lfloor N_{SBG}/2 \rfloor$, determining the second subband resource indication value as follows: $SBRIV = N_{SBG}$ * ($L_{SBG}$ - 1) + $SBG_{start}$ ; otherwise, determining the second subband resource indication value as follows: $SBRIV = N_{SBG}$ * ($N_{SBG}$ - $L_{SBG}$ + 1) + ($N_{SBG}$ - 1 - $SBG_{start}$);

where $L_{SBG}$ represents a number of consecutive subband resource groups occupied by the first-type subband, $N_{SBG}$ represents a total number of subband resource groups in the BWP where the first-type subband is located, $SBRIV$ represents the second subband resource indication value, $SBG_{start}$ represents the position of the starting subband resource group of the first-type subband.

In one example, the transmission module 44 is also configured to send a subband configuration type indication message to the user equipment; wherein if the subband configuration type indication message is used to indicate a Bitmap type, the subband resource indication message carries a Bitmap configuration of the subband resource group occupied by the first-type subband; or, if the subband configuration type indication message is used to indicate a SBRIV type, the subband resource indication message carries a first subband resource indication value corresponding to the first-type subband; or, if the subband configuration type indication message is used to indicate a SBRIV and SBG type, the subband resource indication message carries a second subband resource indication value corresponding to the first-type subband.

In one example, the first-type subband is a frequency domain resource configured on SBFD symbols;

the transmission module 44 is also configured to send a frame structure configuration message to the user equipment, the frame structure configuration message including a starting symbol of the SBFD symbols and a length of the SBFD symbols; wherein the frame structure configuration message is a semi static frame structure configuration message;

Here, the starting symbol of the SBFD symbols and the length of the SBFD symbols are used to determine all of the SBFD symbols configured for the first-type subband;

Here, the starting symbol of the SBFD symbols represents a first symbol of the SBFD symbols in the frame structure, and the length of the SBFD symbols represents a number of consecutive symbols, including the starting symbol, counted forward from the starting symbol; or,

The starting symbol of the SBFD symbols represents a last symbol of the SBFD symbols in the frame structure, and the length of the SBFD symbols represents a number of consecutive symbols, including the starting symbol, counted backward from the starting symbol.

In one example, the first-type subband is a frequency domain resource configured on SBFD symbols; the transmission module 44 is also configured to send an RRC message to the user equipment, wherein the RRC message includes a plurality of slot format combinations, and each of the slot format combinations includes slot format types used for indicating the SBFD symbols; sending a DCI message to the user equipment, wherein the DCI message includes an index of a target slot format combination; wherein the DCI message is used to enable the user equipment to select a corresponding target slot format combination from the plurality of slot format combinations based on the index of the target slot format combination; based on the target slot format combination, determine all of the SBFD symbols used to configure the first-type subband.

Based on the same idea as the above method, a base station is provided in one example of this application, as shown in Fig. 5A. The base station can include a processor 511 and a machine-readable storage medium 512 storing machine executable instructions that can be executed by the processor 511; the processor 511 is configured to execute the machine executable instructions to implement the method for determining subband resources disclosed in the above examples of the present application.

In one example, the processor 511 may include one or more processing cores, such as a 4-core processor, an 8-core processor, etc. The processor 511 can be implemented in at least one hardware form of DSP (Digital Signal Processing), FPGA (Field Programmable Gate Array), or PLA (Programmable Logic Array). Processor 511 can also include a main processor and a coprocessor. The main processor is a processor used to process data in a wake-up state, also known as a Central Processing Unit (CPU). The coprocessor is a low-power processor used to process data in a standby mode. In some embodiments, the processor 511 may be integrated with a GPU (Graphics Processing Unit), which is responsible for rendering and drawing the content required for display on the display screen.

In one example, the base station may also include: a peripheral device interface 513 and at least one peripheral device. The processor 511 and the peripheral device interface 513 can be connected through a bus or a signal line. Each peripheral device can be connected to the peripheral device interface 513 through a bus, a signal line, or a circuit board. The peripheral devices can include at least one of a radio frequency circuit 514 and a power supply 515.

The RF circuit 514 is configured to receive and transmit RF (Radio Frequency) signals, also known as electromagnetic signals. The RF circuit 514 communicates with communication networks and other communication devices through electromagnetic signals. The RF circuit 514 converts electrical signals into electromagnetic signals for transmission, or converts received electromagnetic signals into electrical signals. Optionally, the RF circuit 514 includes an antenna system, an RF transceiver, one or more amplifiers, a tuner, an oscillator, a digital signal processor, a user identity module card, and the like. The RF circuit 514 can communicate with user equipment through at least one wireless communication protocol. This wireless communication protocol includes but is not limited to: the World Wide Web, metropolitan area networks, intranets, various generations of mobile communication networks (2G, 3G, 4G, and 5G), wireless local area networks, and/or WiFi (Wireless Fidelity) networks.

The power supply 515 is configured to power various components in the base station. The power supply 515 can be AC, DC, disposable batteries, or rechargeable batteries.

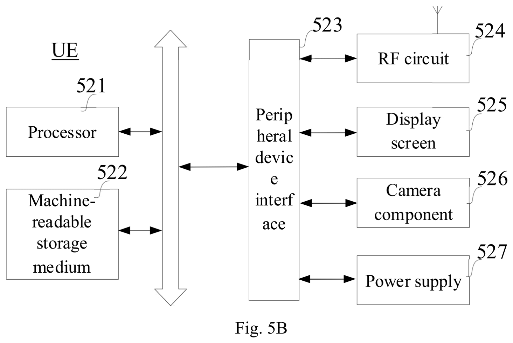

Based on the same idea as the above method, an example of this application provides a user equipment, as shown in Fig. 5B. The user equipment can include a processor 521 and a machine-readable storage medium 522 storing machine executable instructions that can be executed by the processor 521; the processor 521 is configured to execute machine executable instructions to implement the method for determining subband resources disclosed in the above example of the present application.

In one example, the processor 521 may include one or more processing cores, such as a 4-core processor, an 8-core processor, etc. The processor 521 can be implemented in at least one hardware form of DSP, FPGA, or PLA. The processor 521 can also include a main processor and a coprocessor.

In one example, the user equipment also includes: a peripheral device interface 523 and at least one peripheral device. The processor 521 and the peripheral device interface 523 can be connected through a bus or a signal line. Each peripheral device can be connected to the peripheral device interface 523 through a bus, a signal line, or a circuit board. The peripheral device can include at least one of: an RF circuit 524, a touch screen display screen 525, a camera 526, and a power supply 527.

The RF circuit 524 is configured to receive and transmit RF signals, also known as electromagnetic signals. The RF circuit 524 communicates with communication networks and other communication devices through electromagnetic signals. The RF circuit 524 converts electrical signals into electromagnetic signals for transmission, or converts received electromagnetic signals into electrical signals. Optionally, the RF circuit 524 includes an antenna system, an RF transceiver, one or more amplifiers, a tuner, an oscillator, a digital signal processor, a user identity module card, and the like. The RF circuit 524 can communicate with the base station through at least one wireless communication protocol. This wireless communication protocol includes but is not limited to: the World Wide Web, metropolitan area networks, intranets, various generations of mobile communication networks, wireless local area networks, and/or WiFi.

The display screen 525 is configured to display the UI (User Interface). The UI can include graphics, text, icons, videos, and any combination of them. When the display screen 525 is a touch screen display, the display screen 525 also has the ability to collect touch signals on or above the surface of the display screen 525. The touch signal can be input as a control signal to the processor 521 for processing. At this point, the display screen 525 can also be used to provide virtual buttons and/or virtual keyboards, also known as soft buttons and/or soft keyboards.

In some embodiments, the display screen 525 can be one, provided with a front panel of the user equipment. In other embodiments, the display screen 525 can be at least two, respectively arranged on different surfaces of the user equipment or in a folded design. In some further embodiments, the display screen 525 may be a flexible display screen provided on a curved or folded surface of the user equipment. Even, the display screen 525 can be implemented as a non-rectangular or irregular shape, also known as an irregular screen. The display screen 525 can be produced using materials such as LCD (Liquid Crystal Display) and OLED (Organic Light Emitting Diode).

A camera component 526 is configured to capture images or videos. Optionally, the camera component 526 includes a front camera and a rear camera. Usually, the front camera is provided on the front panel of the user equipment, and the rear camera is provided on the back of the user equipment. In some embodiments, there are at least two rear cameras, either the main camera, depth of field camera, wide-angle camera, or telephoto camera, to achieve background virtualization through the fusion of the main camera and depth of field camera, panoramic shooting through the fusion of the main camera and wide-angle camera, and VR (Virtual Reality) shooting or other fusion shooting functions. In some embodiments, the camera component 526 may also include a flash. The flash can be either monochrome or dual color. A dual color temperature flash refers to a combination of a warm light flash and a cold light flash, which can be used for light compensation at different color temperatures.

A power supply 527 is used to power various components in user equipment. The power supply 527 can be AC, DC, disposable battery, or rechargeable battery. When the power supply 527 includes a rechargeable battery, the rechargeable battery can be a wired rechargeable battery or a wireless rechargeable battery. Wired rechargeable batteries are batteries charged through wired lines, while wireless rechargeable batteries are batteries charged through wireless coils. This rechargeable battery can also be used to support fast charging technology.

Based on the same idea as the above method, an example of the present application also provides a machine-readable storage medium on which a number of computer instructions are stored. When the computer instructions are executed by a processor, the methods for determining subband resources disclosed in the above examples of the present application can be implemented.

Here, the machine-readable storage medium can be any electronic, magnetic, optical or other physical storage device, which can contain or store information, such as executable instructions, data, and so on. For example, the machine-readable storage medium can be: an RAM (Random Access Memory), a volatile memory, a non volatile memory, a flash memory, a storage drive (such as a hard drive), a solid-state drive, any type of storage disk (such as optical disks, DVDs, etc.), or similar storage media, or a combination thereof.

The system, the apparatus, the module or unit illustrated in the above embodiments can be implemented by a computer entity or by a product with a certain function. A typical implementation device is a computer, which can take the form of a personal computer, laptop, cellular phone, camera phone, smart phone, personal digital assistant, media player, navigation device, email sending and receiving device, game console, tablet computer, wearable device, or any combination of these devices.

The above is only an embodiment of this application and is not intended to limit it. For technical personnel in this field, there may be various changes and variations in this application. Any modifications, equivalent substitutions, improvements, etc. made within the spirit and principles of this application shall be included within the scope of the claims of this application.

**Claims**

1. A method for determining subband resources, applied to a user equipment, the method comprising:

    receiving a subband resource indication message from a base station, the subband resource indication message comprising frequency domain resource information of a first-type subband;
    determining a starting position and/or an ending position of the first-type subband based on the frequency domain resource of the first-type subband indicated in the frequency domain resource information of the first-type subband, and determining a starting position or an ending position of a guard subband based on the starting position and/or the ending position of the first-type subband;
    receiving a configuration message of the guard subband from the base station, the configuration message of the guard subband comprising a length of the guard subband;
    determining a guard subband resource from a BWP using the starting position of the guard subband and the length of the guard subband, or determining the guard subband resource from the BWP based on the ending position of the guard subband and the length of the guard subband.

2. The method according to claim 1, wherein receiving the configuration message of the guard subband from the base station comprises:

receiving a semi static configuration message from the base station, wherein the semi static configuration message comprises the length of the guard subband; or,

receiving a semi static configuration message from the base station, wherein the semi static configuration message comprises a list of subband lengths, the list of subband lengths comprises lengths of a plurality of guard subbands;

receiving a dynamic configuration message from the base station, wherein the dynamic configuration message comprises index information used to indicate to select a length of a guard subband corresponding to the index information from the list of subband lengths.

3. The method according to claim 1, wherein determining the starting position or the ending position of the guard subband based on the starting position and/or the ending position of the first-type subband comprises:

if the first-type subband is located at an upper boundary of the BWP, determining the ending position of the guard subband based on the starting position of the first-type subband; or,

if the first-type subband is located at a lower boundary of the BWP, determining the starting position of the guard subband based on the ending position of the first-type subband; or,

if the first-type subband is located in a middle position of the BWP, determining the starting position of the guard subband on an upper side of the first-type subband based on the ending position of the first-type subband, and determining the ending position of the guard subband on a lower side of the first-type subband based on the starting position of the first-type subband.

4. The method according to any one of claims 1 to 3, wherein the frequency domain resource information of the first-type subband comprises a Bitmap configuration of a subband resource group occupied by the first-type subband; wherein if the Bitmap configuration indicates that the subband resource group corresponds to a first value, the subband resource group is occupied by the first-type subband; if the Bitmap configuration indicates that the subband resource group corresponds to a second value, the subband resource group is not occupied by the first-type subband; or,

the frequency domain resource information of the first-type subband comprises a first subband resource indication value corresponding to the first-type subband; wherein the first subband resource indication value is determined by a position of a starting physical resource block of the first-type subband and a number of consecutive physical resource blocks occupied by the first-type subband; or,

the frequency domain resource information of the first-type subband comprises a second subband resource indication value corresponding to the first-type subband; wherein the second subband resource indication value is determined by a position of a starting subband resource group of the first-type subband and a number of consecutive subband resource groups occupied by the first-type subband.

5. The method according to claim 4, wherein a process of obtaining the first subband resource indication value comprises:

if $(L_{PRB} - 1) \leq \left\lfloor N_{BWP}^{size}/2 \right\rfloor$, determining the first subband resource indication value as follows:

$SBRIV = N_{BWP}^{size} * (L_{PRB} - 1) + PRB_{Start}$; otherwise, determining the first subband resource indication value as follows: $SBRIV = N_{BWP}^{size} * \left( N_{BWP}^{size} - L_{PRB} + 1 \right) + (N_{BWP}^{size} - 1 - PRB_{Start})$;

wherein $L_{PRB}$ represents the number of consecutive physical resource blocks occupied by the first-type subband, $N_{BWP}^{size}$ represents a total number of physical resource blocks in the BWP where the first-type subband is located, $SBRIV$ represents the first subband resource indication value, $PRB_{Start}$ represents the position of the starting physical resource block of the first-type subband.

6. The method according to claim 4, wherein a process of obtaining the second subband resource indication value comprises:

if $(L_{SBG} - 1) \leq \lfloor N_{SBG}/2 \rfloor$, determining the second subband resource indication value as follows: $SBRIV = N_{SBG} * (L_{SBG} - 1) + SBG_{start}$; otherwise, determining the second subband resource indication value as follows: $SBRIV = N_{SBG} * (N_{SBG} - L_{SBG} + 1) + (N_{SBG} - 1 - SBG_{start})$;

wherein $L_{SBG}$ represents the number of consecutive subband resource groups occupied by the first-type subband, $N_{SBG}$ represents a total number of subband resource groups in the BWP where the first-type subband is located, $SBRIV$ represents the second subband resource indication value, $SBG_{start}$ represents the position of the starting subband resource group of the first-type subband.

7. The method according to claim 4, wherein before receiving the subband resource indication message from the base station, the method further comprises:

receiving a subband configuration type indication message from the base station;
if the subband configuration type indication message is used to indicate a Bitmap type, determining that the subband resource indication message carries the Bitmap configuration of the subband resource group occupied by the first-type subband; or,
if the subband configuration type indication message is used to indicate a SBRIV type, determining that the subband resource indication message carries the first subband resource indication value corresponding to the first-type subband; or,
if the subband configuration type indication message is used to indicate a SBRIV type and a SBG type, determining that the subband resource indication message carries the second subband resource indication value corresponding to the first-type subband.

8. The method according to any one of claims 1 to 3, wherein the first-type subband is an uplink subband, or the first-type subband is a downlink subband; after determining the guard subband resource from the BWP, the method further comprises:

if the frequency domain resource of the first-type subband is an uplink subband resource, determining a downlink subband resource from the BWP based on the uplink subband resource and the guard subband resource; or,
if the frequency domain resource of the first-type subband is a downlink subband resource, determining an uplink subband resource from the BWP based on the downlink subband resource and the guard subband resource.

9. The method according to claim 8, wherein the BWP comprises a plurality of subband resource groups; after determining the guard subband resource from the BWP, the method further comprises:

for any one of the subband resource groups:

if the subband resource group is a frequency domain resource group that comprises an uplink subband resource and a guard subband resource, sending uplink data on the uplink subband resource of the subband resource group or prohibiting sending uplink data on the uplink subband resource of the subband resource group;
if the subband resource group is a subband resource group that comprises a downlink subband resource and a guard subband resource, receiving downlink data on the downlink subband resource of the subband resource group, or prohibiting receiving downlink data on the downlink subband resource of the subband resource group.

10. The method according to any one of claims 1 to 3, wherein the first-type subband is a frequency domain resource configured on SBFD symbols; the method further comprises:

receiving a frame structure configuration message from the base station, wherein the frame structure configuration message comprises a starting symbol of the SBFD symbols and a length of the SBFD symbols; wherein the frame structure configuration message is a semi static frame structure configuration message;
determining all of the SBFD symbols used to configure the first-type subband based on the starting symbol of the SBFD symbols and the length of the SBFD symbols.

11. The method according to claim 10, wherein the starting symbol of the SBFD symbols represents a first symbol of the SBFD symbols in the frame structure, and the length of the SBFD symbols represents a number of consecutive symbols, including the starting symbol, counted forward from the starting symbol; or, the starting symbol of the SBFD symbols represents a last symbol of the SBFD symbols in the frame structure, and the length of the SBFD symbols represents a number of consecutive symbols, including the starting symbol, counted backward from the starting symbol.

12. The method according to claim 10, wherein if the frame structure configuration message is a semi static frame structure configuration message, the frame structure configuration message is TDD-UL-DL-ConfigCommon or TDD-UL-DL-ConfigDedicated in an RRC message.

13. The method according to any one of claims 1 to 3, wherein the first-type subband is a frequency domain resource configured on SBFD symbols; the method further comprises:

receiving an RRC message from the base station, wherein the RRC message comprises a plurality of slot format combinations, and each of the slot format combinations comprises a slot format type for indicating the SBFD symbols;
receiving a DCI message from the base station, wherein the DCI message comprises an index of a target slot format combination;
selecting a corresponding target slot format combination from the plurality of slot format combinations based on the index of the target slot format combination;
determining all of the SBFD symbols used to configure the first-type subband based on the target slot format combination.

14. A method for determining subband resources, applied to a base station, the method comprising:

sending a subband resource indication message to a user equipment, wherein the subband resource indication message comprises frequency domain resource information of a first-type subband; wherein the subband resource indication message is used to indicate the user equipment to determine a starting position and/or an ending position of the first-type subband according to the frequency domain resource of the first-type subband indicated in the frequency domain resource information of the first-type subband, and to determine a starting position or an ending position of a guard subband based on the starting position and/or the ending position of the first-type subband;
sending a configuration message of a guard subband to the user equipment, wherein the configuration message of the guard subband comprises a length of the guard subband; wherein the configuration message is used to indicate the user equipment to determine a guard subband resource from a BWP using the starting position of the guard subband and the length of the guard subband, or to determine the guard subband resource from the BWP based on the ending position of the guard subband and the length of the guard subband.

15. The method according to claim 14, wherein sending the configuration message of the guard subband to the user equipment comprises:

sending a semi static configuration message to the user equipment, wherein the semi static configuration message comprises the length of the guard subband; or,
sending a semi static configuration message to the user equipment, wherein the semi static configuration message comprises a list of subband lengths, and the list of subband lengths comprises lengths of a plurality of guard subbands;
sending a dynamic configuration message to the user equipment, wherein the dynamic configuration message comprises index information used to indicate to select a length of a guard subband corresponding to the index information from the list of subband lengths.

16. The method according to claim 14 or 15, wherein the frequency domain resource information of the first-type subband comprises a Bitmap configuration of a subband resource group occupied by the first-type subband; wherein if the Bitmap configuration indicates that the subband resource group corresponds to a first value, the subband resource group is occupied by the first-type subband; if the Bitmap configuration indicates that the subband resource group corresponds to a second value, the subband resource group is not occupied by the first-type subband; or,

the frequency domain resource information of the first-type subband includes a first subband resource indication value corresponding to the first-type subband; wherein the first subband resource indication value is determined by a position of a starting physical resource block of the first-type subband and a number of consecutive physical resource blocks occupied by the first-type subband; or,
the frequency domain resource information of the first-type subband comprises a second subband resource indication value corresponding to the first-type subband; wherein the second subband resource indication value is determined by a position of a starting subband resource group of the first-type subband and a number of consecutive subband resource groups occupied by the first-type subband.

17. The method according to claim 16, wherein a process of obtaining the first subband resource indication value comprises:

if $(L_{PRB} - 1) \leq \lfloor N_{BWP}^{size}/2 \rfloor$, determining the first subband resource indication value as follows:

$SBRIV = N_{BWP}^{size} * (L_{PRB} - 1) + PRB_{Start}$ ; otherwise, determining the first subband resource indication value as follows: $SBRIV = N_{BWP}^{size} * (N_{BWP}^{size} - L_{PRB} + 1) + (N_{BWP}^{size} - 1 - PRB_{Start})$ ;

wherein $L_{PRB}$ represents the number of consecutive physical resource blocks occupied by the first-type subband, $N_{BWP}^{size}$ represents a total number of physical resource blocks in the BWP where the first-type subband is located, *SBRIV* represents the first subband resource indication value, $PRB_{Start}$ represents the position of the starting physical resource block of the first-type subband.

18. The method according to claim 16, wherein a process of obtaining the second subband resource indication value comprises:

if $(L_{SBG} - 1) \leq \lfloor N_{SBG}/2 \rfloor$, determining the second subband resource indication value as follows: *SBRIV* = $N_{SBG}$ * ($L_{SBG}$ - 1) + SBG$_{start}$; otherwise, determining the second subband resource indication value as follows: *SBRIV* = $N_{SBG}$ * ($N_{SBG}$ - $L_{SBG}$ + 1) + ($N_{SBG}$ - 1 - SBG$_{start}$);
wherein $L_{SBG}$ represents the number of consecutive subband resource groups occupied by the first-type subband, $N_{SBG}$ represents a total number of subband resource groups in the BWP where the first-type subband is located, *SBRIV* represents the second subband resource indication value, SBG$_{start}$ represents the positon of the starting subband resource group of the first-type subband.

19. The method according to claim 16, wherein prior to sending a subband resource indication message to the user equipment, the method further comprises:

sending a subband configuration type indication message to the user equipment; wherein
if the subband configuration type indication message is used to indicate a Bitmap type, the subband resource indication message carries the Bitmap configuration of the subband resource group occupied by the first-type subband; or,
if the subband configuration type indication message is used to indicate a SBRIV type, the subband resource indication message carries the first subband resource indication value corresponding to the first-type subband; or,
if the subband configuration type indication message is used to indicate a SBRIV type and a SBG type, the subband resource indication message carries the second subband resource indication value corresponding to the first-type subband.

20. The method according to claim 14 or 15, wherein the first-type subband is a frequency domain resource configured on SBFD symbols; the method further comprises:

sending a frame structure configuration message to the user equipment, wherein the frame structure configuration message comprises a starting symbol of the SBFD symbols and a length of the SBFD symbols; wherein the frame structure configuration message is a semi static frame structure configuration message;
wherein the starting symbol of the SBFD symbols and the length of the SBFD symbols are used to determine all of the SBFD symbols configured for the first-type subband;
wherein the starting symbol of the SBFD symbols represents a first symbol of the SBFD symbols in the frame structure, and the length of the SBFD symbols represents a number of consecutive symbols, including the starting symbol, counted forward from the starting symbol; or,
the starting symbol of the SBFD symbols represents a last symbol of the SBFD symbols in the frame structure, and the length of the SBFD symbols represents a number of consecutive symbols, including the starting symbol, counted backward from the starting symbol.

21. The method according to claim 14 or 15, wherein the first-type subband is a frequency domain resource configured on SBFD symbols; and the method further comprises:

sending an RRC message to the user equipment, wherein the RRC message comprises a plurality of slot format combinations, and each of the slot format combinations comprises a slot format type for indicating the SBFD symbols;

sending a DCI message to the user equipment, wherein the DCI message comprises an index of a target slot format combination; wherein the DCI message is used to enable the user equipment to select a corresponding target slot format combination from the plurality of slot format combinations based on the index of the target slot format combination; and to determine all of the SBFD symbols used to configure the first-type subband based on the target slot format combination.

22. An apparatus for determining subband resources, applied to a user equipment, the apparatus comprising:

a receiving module configured to receive a subband resource indication message from a base station, the subband resource indication message comprising frequency domain resource information of the first-type subband;

a determining module configured to determine a starting position and/or an ending position of the first-type subband based on the frequency domain resourceof the first-type subband indicated in the frequency domain resource information of the first-type subband, and determine a starting position or an ending position of a guard subband based on the starting position and/or the ending position of the first-type subband;

the receiving module further configured to receive a configuration message of the guard subband from the base station, and the configuration message of the guard subband comprising a length of the guard subband;

the determining module further configured to determine a guard subband resource from a BWP using the starting position of the guard subband and the length of the guard subband, or to determine the guard subband resource from the BWP based on the ending position of the guard subband and the length of the guard subband.

23. The apparatus according to claim 22, wherein

the receiving module, when receiving the configuration message of the guard subband from the base station, is configured to: receive a semi static configuration message from the base station, wherein the semi static configuration message comprises the length of the guard subband; or,

receive a semi static configuration message from the base station, wherein the semi static configuration message comprises a list of subband lengths, the list of subband lengths comprises lengths of a plurality of guard subbands; receive a dynamic configuration message from the base station, wherein the dynamic configuration message comprises index information used to indicate to select a length of a guard subband corresponding to the index information from the list of subband lengths.

24. The apparatus according to claim 22, wherein

the determining module, when determining the starting position or the ending position of the guard subband based on the starting position and/or the ending position of the first-type subband, is configured to: if the first-type subband is located at an upper boundary of the BWP, determine the ending position of the guard subband based on the starting position of the first-type subband; or,

if the first-type subband is located at a lower boundary of the BWP, determine the starting position of the guard subband based on the ending position of the first-type subband; or,

if the first-type subband is located in a middle position of the BWP, determine the starting position of the guard subband on an upper side of the first-type subband based on the ending position of the first-type subband, and determine the ending position of the guard subband on a lower side of the first-type subband based on the starting position of the first-type subband.

25. The apparatus according to any one of claims 22 to 24, wherein the frequency domain resource information of the first-type subband comprises a Bitmap configuration of a subband resource group occupied by the first-type subband; wherein if the Bitmap configuration indicates that the subband resource group corresponds to a first value, the subband resource group is occupied by the first-type subband; if the Bitmap configuration indicates that the subband resource group corresponds to a second value, the subband resource group is not occupied by the first-type subband; or,

the frequency domain resource information of the first-type subband comprises a first subband resource indication value corresponding to the first-type subband; wherein the first subband resource indication value is determined by a position of a starting physical resource block of the first-type subband and a number of consecutive physical resource blocks occupied by the first-type subband; or,

the frequency domain resource information of the first-type subband comprises a second subband resource indication value corresponding to the first-type subband; wherein the second subband resource indication value is determined by a position of a starting subband resource group of the first-type subband and a number of consecutive subband resource groups occupied by the first-type subband.

26. The apparatus according to claim 25, wherein a process of obtaining the first subband resource indication value comprises:

if $(L_{PRB} - 1) \leq \lfloor N_{BWP}^{size}/2 \rfloor$, determining the first subband resource indication value as follows:

$$SBRIV = N_{BWP}^{size} * (L_{PRB} - 1) + PRB_{Start}$$ ; otherwise, determining the first subband resource indication value as follows: $$SBRIV = N_{BWP}^{size} * \left(N_{BWP}^{size} - L_{PRB} + 1\right) + (N_{BWP}^{size} - 1 - PRB_{Start})$$ ;

wherein $L_{PRB}$ represents the number of consecutive physical resource blocks occupied by the first-type subband, $N_{BWP}^{size}$ represents a total number of physical resource blocks in the BWP where the first-type subband is located, SBRIV represents the first subband resource indication value, $PRB_{Start}$ represents the position of the starting physical resource block of the first-type subband.

27. The apparatus according to claim 25, wherein a process of obtaining the second subband resource indication value comprises:

if $(L_{SBG} - 1) \leq \lfloor N_{SBG}/2 \rfloor$, determining the second subband resource indication value as follows: $SBRIV = N_{SBG} * (L_{SBG} - 1) + SBG_{start}$ ; otherwise, determining the second subband resource indication value as follows: $SBRIV = N_{SBG} * (N_{SBG} - L_{SBG} + 1) + (N_{SBG} - 1 - SBG_{start})$;

wherein $L_{SBG}$ represents the number of consecutive subband resource groups occupied by the first-type subband, $N_{SBG}$ represents the total number of subband resource groups in the BWP where the first-type subband is located, SBRIV represents the second subband resource indication value, $SBG_{start}$ represents the position of the starting subband resource group of the first-type subband.

28. The apparatus according to claim 25, wherein

the receiving module is further configured to receive a subband configuration type indication message from the base station;

if the subband configuration type indication message is used to indicate a Bitmap type, determine that the subband resource indication message carries the Bitmap configuration of the subband resource group occupied by the first-type subband; or,

if the subband configuration type indication message is used to indicate a SBRIV type, determine that the subband resource indication message carries the first subband resource indication value corresponding to the first-type subband; or,

if the subband configuration type indication message is used to indicate a SBRIV type and a SBG type, determine that the subband resource indication message carries the second subband resource indication value corresponding to the first-type subband.

29. The apparatus according to any one of claims 22 to 24, wherein the first-type subband is an uplink subband, or the first-type subband is a downlink subband; the determining module is further configured to:

if the frequency domain resource of the first-type subband is an uplink subband resource, determine a downlink subband resource from the BWP based on the uplink subband resource and the guard subband resource; or,

if the frequency domain resource of the first-type subband is a downlink subband resource, determine an uplink subband resource from the BWP based on the downlink subband resource and the guard subband resource.

30. The apparatus according to claim 29, wherein the BWP comprises a plurality of subband resource groups; the apparatus further comprises:

a transmission module configured to, for any one of the subband resource groups, if the subband resource group is a frequency domain resource group that comprises an uplink subband resource and a guard subband resource, send uplink data on the uplink subband resource of the subband resource group or prohibit sending uplink data on the uplink subband resource of the subband resource group;

the transmission module further configured to, if the subband resource group is a subband resource group that comprises a downlink subband resource and a guard subband resource, receive downlink data on the downlink subband resource of the subband resource group, or prohibit receiving downlink data on the downlink subband resource of the subband resource group.

31. The apparatus according to claims 22-24, wherein the first-type subband is a frequency domain resource configured on SBFD symbols;

   the receiving module is further configured to receive a frame structure configuration message from the base station, wherein the frame structure configuration message comprises a starting symbol of the SBFD symbols and a length of the SBFD symbols; wherein the frame structure configuration message is a semi static frame structure configuration message;
   the determining module is further configured to determine all of the SBFD symbols used to configure the first-type subband based on the starting symbol of the SBFD symbols and the length of the SBFD symbols.

32. The apparatus according to claim 31, wherein the starting symbol of the SBFD symbols represents a first symbol of the SBFD symbols in the frame structure, and the length of the SBFD symbols represents a number of consecutive symbols, including the starting symbol, counted forward from the starting symbol; or,
   the starting symbol of the SBFD symbols represents a last symbol of the SBFD symbols in the frame structure, and the length of the SBFD symbols represents a number of consecutive symbols, including the starting symbol, counted backward from the starting symbol.

33. The apparatus according to claim 31, wherein if the frame structure configuration message is a semi static frame structure configuration message, the frame structure configuration message is TDD-UL-DL-ConfigCommon or TDD-UL-DL-ConfigDedicated in an RRC message.

34. The apparatus according to claims 22 to 24, wherein the first-type subband is a frequency domain resource configured on SBFD symbols;

   the receiving module is further configured to receive an RRC message from the base station, wherein the RRC message comprises a plurality of slot format combinations, and each of the slot format combinations comprises a slot format type for indicating the SBFD symbols; receive a DCI message from the base station, wherein the DCI message comprises an index of a target slot format combination;
   the determining module is further configured to select a corresponding target slot format combination from the plurality of slot format combinations based on the index of the target slot format combination; determine all of the SBFD symbols used to configure the first-type subband based on the target slot format combination.

35. An apparatus for determining subband resources, applied to a base station, the apparatus comprising:

   an obtaining module configured to obtain frequency domain resource information of a first-type subband;
   a transmission module configured to send a subband resource indication message to a user equipment, wherein the subband resource indication message including the frequency domain resource information of the first-type subband; wherein the subband resource indication message is used to indicate the user equipment to determine a starting position and/or an ending position of the first-type subband according to the frequency domain resource of the first-type subband indicated in the frequency domain resource information of the first-type subband, and to determine a starting position or an ending position of a guard subband based on the starting position and/or the ending position of the first-type subband;
   the obtaining module further configured to obtain a length of the guard subband;
   the transmission module further configured to send a configuration message of the guard subband to the user equipment, wherein the configuration message of the guard subband comprises the length of the guard subband; wherein the configuration message is used to indicate the user equipment to determine a guard subband resource from a BWP using the starting position of the guard subband and the length of the guard subband, or to determine the guard subband resource from the BWP based on the ending position of the guard subband and the length of the guard subband.

**36.** The apparatus according to claim 35, wherein

the transmission module, when sending the configuration message of the guard subband to the user equipment, is configured to send a semi static configuration message to the user equipment, wherein the semi static configuration message comprises the length of the guard subband;
or, send a semi static configuration message to the user equipment, wherein the semi static configuration message comprises a list of subband lengths, and the list of subband lengths comprises lengths of a plurality of guard subbands; send a dynamic configuration message to the user equipment, wherein the dynamic configuration message comprises index information used to indicate to select a length of a guard subband corresponding to the index information from the list of subband lengths.

**37.** The apparatus according to claim 35 or 36, wherein the frequency domain resource information of the first-type subband comprises a Bitmap configuration of a subband resource group occupied by the first-type subband; wherein if the Bitmap configuration indicates that the subband resource group corresponds to a first value, the subband resource group is occupied by the first-type subband; if the Bitmap configuration indicates that the subband resource group corresponds to a second value, the subband resource group is not occupied by the first-type subband; or,

the frequency domain resource information of the first-type subband includes a first subband resource indication value corresponding to the first-type subband; wherein the first subband resource indication value is determined by a position of a starting physical resource block of the first-type subband and a number of consecutive physical resource blocks occupied by the first-type subband; or,
the frequency domain resource information of the first-type subband comprises a second subband resource indication value corresponding to the first-type subband; wherein the second subband resource indication value is determined by a position of a starting subband resource group of the first-type subband and a number of consecutive subband resource groups occupied by the first-type subband.

**38.** The apparatus according to claim 37, wherein the process of obtaining the first subband resource indication value comprises:

if $(L_{PRB} - 1) \leq \lfloor N_{BWP}^{size}/2 \rfloor$ , determining the first subband resource indication value as follows:

$$SBRIV = N_{BWP}^{size} * (L_{PRB} - 1) + PRB_{Start}$$ ; otherwise, determining the first subband resource indica

tion value as follows: $SBRIV = N_{BWP}^{size} * \left(N_{BWP}^{size} - L_{PRB} + 1\right) + \left(N_{BWP}^{size} - 1 - PRB_{Start}\right)$ ;

wherein $L_{PRB}$ represents the number of consecutive physical resource blocks occupied by the first-type subband, $N_{BWP}^{size}$ represents a total number of physical resource blocks in the BWP where the first-type subband is located, $SBRIV$ represents the first subband resource indication value, $PRB_{Start}$ represents the position of the starting physical resource block of the first-type subband.

**39.** The apparatus according to claim 37, wherein the process of obtaining the second subband resource indication value comprises:

if $(L_{SBG} - 1) \leq \lfloor N_{SBG}/2 \rfloor$ , determining the second subband resource indication value as follows: $SBRIV = N_{SBG} * (L_{SBG} - 1) + SBG_{start}$ ; otherwise, determining the second subband resource indication value as follows: $SBRIV = N_{SBG} * (N_{SBG} - L_{SBG} + 1) + (N_{SBG} - 1 - SBG_{start})$ ;
wherein $L_{SBG}$ represents the number of consecutive subband resource groups occupied by the first-type subband, $N_{SBG}$ represents a total number of subband resource groups in the BWP where the first-type subband is located, $SBRIV$ represents the second subband resource indication value, $SBG_{start}$ represents the position of the starting subband resource group of the first-type subband.

**40.** The apparatus according to claim 37, wherein

the transmission module is further configured to send a subband configuration type indication message to the user equipment; wherein
if the subband configuration type indication message is used to indicate a Bitmap type, the subband resource indication message carries the Bitmap configuration of the subband resource group occupied by the first-type subband; or,
if the subband configuration type indication message is used to indicate a SBRIV type, the subband resource indication message carries the first subband resource indication value corresponding to the first-type subband; or,
if the subband configuration type indication message is used to indicate a SBRIV type and a SBG type, the subband resource indication message carries the second subband resource indication value corresponding to the first-type subband.

41. The apparatus according to claim 35 or 36, wherein the first-type subband is a frequency domain resource configured on SBFD symbols;

the transmission module is further configured to send a frame structure configuration message to the user equipment, wherein the frame structure configuration message comprises a starting symbol of the SBFD symbols and a length of the SBFD symbols; wherein the frame structure configuration message is a semi static frame structure configuration message;
wherein the starting symbol of the SBFD symbols and the length of the SBFD symbol are used to determine all of the SBFD symbols configured for the first-type subband;
wherein the starting symbol of the SBFD symbols represents a first symbol of the SBFD symbol in the frame structure, and the length of the SBFD symbols represents a number of consecutive symbols, including the starting symbol, counted forward from the starting symbol; or,
the starting symbol of the SBFD symbols represents a last symbol of the SBFD symbols in the frame structure, and the length of the SBFD symbols represents a number of consecutive symbols, including the starting symbol, counted backward from the starting symbol.

42. The apparatus according to claim 35 or 36, wherein the first-type subband is a frequency domain resource configured on SBFD symbols; the transmission module is further configured to send an RRC message to the user equipment, wherein the RRC message comprises a plurality of slot format combinations, and each of the slot format combinations comprises a slot format type for indicating the SBFD symbols; send a DCI message to the user equipment, wherein the DCI message comprises an index of a target slot format combination; wherein the DCI message is used to enable the user equipment to select a corresponding target slot format combination from the plurality of slot format combinations based on the index of the target slot format combination and to determine all of the SBFD symbols used to configure the first-type subband based on the target slot format combination.

43. A user equipment comprising a processor and a machine-readable storage medium, wherein the machine-readable storage medium stores machine executable instructions that are able to be executed by the processor; and the processor is configured to execute the machine executable instructions to implement the method according to any one of claims 1 to 13.

44. A base station comprising a processor and a machine-readable storage medium, wherein the machine-readable storage medium stores machine executable instructions that are able to be executed by the processor; and the processor is configured to execute machine executable instructions to implement the method according to any one of claims 14 to 21.

Receive a subband resource indication message from a base station, the subband resource indication message including frequency domain resource information of a first-type subband — 111

Determine a starting position and/or an ending position of the first-type subband based on the frequency domain resource information of the first-type subband indicated in the frequency domain resource information of the first-type subband, and determine a starting position or an ending position of a guard subband based on the starting position and/or the ending position of the first-type subband — 112

Receive a configuration message of the guard subband from the base station, the configuration message of the guard subband including a length of the guard subband — 113

Determine a guard subband resource from a BWP using the starting position of the guard subband and the length of the guard subband, or determine the guard subband resource from the BWP based on the ending position of the guard subband and the length of the guard subband — 114

Fig. 1A

Send a subband resource indication message to a user equipment, the subband resource indication message including frequency domain resource information of a first-type subband; wherein the subband resource indication message is used to indicate the user equipment of the frequency domain resources of the first-type subband indicated in the frequency domain resource information of the first-type subband, determine a starting position and/or an ending position of the first-type subband, and determining a starting position or an ending position of a guard subband based on the starting position and/or the ending position of the first-type subband — 121

Send a configuration message of a guard subband to the user equipment, the configuration message of the guard subband including a length of the guard subband; wherein the configuration message is used to indicate that the user equipment to determine a guard subband resource from a BWP using the starting position of the guard subband and the length of the guard subband, or to determine a guard subband resource from the BWP based on the ending position of the guard subband and the length of the guard subband — 122

Fig. 1B

EP 4 704 483 A1

Fig. 2

Fig. 3

Receiving
module 41

Determining
module 42

Apparatus for determining
subband resources

Fig. 4A

Obtaining
module 43

Transmission
module 44

Apparatus for determining
subband resources

Fig. 4B

Base
station
511

Processor

512

Machine-
readable
storage
medium

513

Peripheral device interface

514

RF circuit

515

Power supply

Fig. 5A

UE

521

Processor

522

Machine-
readable
storage
medium

523

Peripheral device interface

524

RF circuit

525

Display screen

526

Camera component

527

Power supply

Fig. 5B

## INTERNATIONAL SEARCH REPORT

| International application No. |
| --- |
| **PCT/CN2023/110500** |

**A. CLASSIFICATION OF SUBJECT MATTER**

H04W 72/23(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CJFD, 3GPP, EXTNT, WPABS, VNE: 子带, 保护, 指示, 起始, 开始, 结束, 长度, 位置, 带宽部分, sub-band, protect, indication, begin, end, length, location, BWP

**C. DOCUMENTS CONSIDERED TO BE RELEVANT**

| Category* | Citation of document, with indication, where appropriate, of the relevant passages | Relevant to claim No. |
| --- | --- | --- |
| X | US 2021288852 A1 (HUAWEI TECHNOLOGIES CO., LTD.) 16 September 2021 (2021-09-16) description, paragraphs 26-150, and claims 1-20 | 1-3, 14-16, 22-24, 35, 36, 43, 44 |
| A | CN 101567714 A (SHARP CORP.) 28 October 2009 (2009-10-28) entire document | 1-44 |
| A | CN 109392141 A (HUAWEI TECHNOLOGIES CO., LTD.) 26 February 2019 (2019-02-26) entire document | 1-44 |
| A | CN 114342500 A (HUAWEI TECHNOLOGIES CO., LTD.) 12 April 2022 (2022-04-12) entire document | 1-44 |
| A | US 2021377938 A1 (QUALCOMM INC.) 02 December 2021 (2021-12-02) entire document | 1-44 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2023** | **08 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/110500**

| Patent document cited in search report | | | Publication date (day/month/year) | Patent family member(s) | | | Publication date (day/month/year) |
|---|---|---|---|---|---|---|---|
| US | 2021288852 | A1 | 16 September 2021 | KR | 20210094076 | A | 28 July 2021 |
| | | | | EP | 3890419 | A1 | 06 October 2021 |
| | | | | EP | 3890419 | A4 | 19 January 2022 |
| | | | | JP | 2022509681 | A | 21 January 2022 |
| | | | | JP | 7197700 | B2 | 27 December 2022 |
| | | | | BR | 112021010349 | A2 | 24 August 2021 |
| | | | | CA | 3121404 | A1 | 04 June 2020 |
| | | | | WO | 2020108275 | A1 | 04 June 2020 |
| CN | 101567714 | A | 28 October 2009 | US | 2011034198 | A1 | 10 February 2011 |
| | | | | US | 8442568 | B2 | 14 May 2013 |
| | | | | WO | 2009131225 | A1 | 29 October 2009 |
| CN | 109392141 | A | 26 February 2019 | EP | 3661294 | A1 | 03 June 2020 |
| | | | | EP | 3661294 | A4 | 15 July 2020 |
| | | | | EP | 3661294 | B1 | 31 August 2022 |
| | | | | WO | 2019029366 | A1 | 14 February 2019 |
| | | | | US | 2020178252 | A1 | 04 June 2020 |
| | | | | US | 11310790 | B2 | 19 April 2022 |
| CN | 114342500 | A | 12 April 2022 | None | | | |
| US | 2021377938 | A1 | 02 December 2021 | EP | 4158834 | A1 | 05 April 2023 |
| | | | | WO | 2021242931 | A1 | 02 December 2021 |
| | | | | TW | 202147902 | A | 16 December 2021 |

Form PCT/ISA/210 (patent family annex) (July 2022)